# EUROPEAN PATENT APPLICATION

(11) **EP 2 093 091 A2**
(43) Date of publication of application: **26.08.2009**
(21) Application number: 09153062.6
(22) Date of filing: 18.02.2009
(51) Int. Cl.: B60K 17/356

(54) **Hydraulic four-wheel-drive working vehicle**

(30) Priority: 22.02.2008 JP 2008041051
(71) Applicant: KANZAKI KOKYUKOKI MFG. CO., LTD., Amagasaki-shi, Hyogo 661-0981 (JP)
(72) Inventor: Yasuda, Toshifumi, Hyogo Hyogo 661-0981 (JP); Nozaki, Takeaki, Hyogo Hyogo 661-0981 (JP); Kanenobu, Hideki, Hyogo Hyogo 661-0981 (JP)
(74) Representative: Peckmann, Ralf

(57) **Abstract**

A hydraulic four-wheel-drive working vehicle includes a hydraulic pump unit having a hydraulic pump main body of a variable displacement type, a pair of left and right first motor devices driving a left and right first driving wheels, and a pair of left and right second motor devices driving a left and right second driving wheels, wherein each of the pair of first motor devices and the pair of second motor devices includes a hydraulic motor main body forming an HST in cooperation with the hydraulic pump main body, a motor volume adjusting mechanism, and a hydraulic actuating mechanism that operates the motor volume adjusting mechanism, and the hydraulic actuating mechanisms in the pair of first motor devices and the pair of second motor devices are operated and controlled with use of hydraulic fluid from a single hydraulic pressure source.

## Description

### BACKGROUND OF THE INVENTION

### Field of the Invention

The present invention relates to a hydraulic four-wheel-drive working vehicle in which a pair of first driving wheels and a pair of second driving wheels respectively arranged on one side and the other side in a vehicle lengthwise direction are driven by corresponding motor devices including hydraulic motor main bodies.

### Related Art

A hydraulic four-wheel-drive working vehicle in which a pair of first driving wheels and a pair of second driving wheels respectively arranged on one side and the other side in the vehicle lengthwise direction are respectively driven by wheel motor devices including hydraulic motor main bodies has been conventionally proposed (see, for example, Japanese unexamined patent publication No. 2002-219959).

The hydraulic four-wheel-drive working vehicle includes a hydraulic pump unit having a hydraulic pump main body of variable displacement type operatively connected to a driving power source, and four wheel motor devices respectively driving the pair of first driving wheels and the pair of second driving wheels.

Each of the wheel motor devices includes a hydraulic motor main body of fixed displacement type operatively driving the corresponding driving wheel, and the hydraulic motor main body is fluidly connected to the hydraulic pump main body through hydraulic lines such as conduits.

The hydraulic four-wheel-drive working vehicle is suitably applied to a working vehicle such as a mower tractor that is needed to secure free space between the pair of first driving wheels and/or between the pair of second driving wheels since the hydraulic pump main body and the hydraulic motor main bodies could be fluidly connected with hydraulic lines such as conduits.

In a working vehicle such as a mower tractor, it is desirable to set a variable region of a driving speed/driving torque according to a traveling situation (or usage situation). That is, it is desirable to change the driving speed/driving torque of the driving wheel at a low-speed/high-torque mode when the working vehicle is in a working situation and to change the driving speed/driving torque of the driving wheel at a high-speed/low-torque mode when the working vehicle is in a traveling situation on a road.

However, in the conventional hydraulic four-wheel-drive working vehicle, a variable range of the driving speed/driving torque of the driving wheel depends only on a variable range of suction/discharge amount of the hydraulic pump main body of variable displacement type.
That is, the conventional configuration can change the driving speed/driving torque of the driving wheel only within the variable range of the hydraulic pump main body, and cannot change a driving mode according to the traveling situation.

### SUMMARY OF THE INVENTION

In view of the prior art, it is an object of the present invention to provide a hydraulic four-wheel-drive working vehicle capable of changing a variable region of a driving speed/driving torque of a driving wheel according to the traveling situation such as a travel with working or a travel on a road.

In order to achieve the object, the present invention provides a hydraulic four-wheel-drive working vehicle including a driving power source; a pair of left and right first driving wheels arranged on one side in a vehicle lengthwise direction; a pair of left and right second driving wheels arranged on the other side in the vehicle lengthwise direction; a hydraulic pump unit including a hydraulic pump main body operatively driven by the driving power source and a pump volume adjusting mechanism that varies a suction/discharge amount of the hydraulic pump main body upon manipulation of a main speed-change operation member capable of being manually manipulated; a pair of left and right first motor devices that respectively drives the left and right first driving wheels; and a pair of left and right second motor devices that respectively drives the left and right second driving wheels. Each of the pair of first motor devices and the pair of second motor devices includes a hydraulic motor main body that is fluidly connected to the hydraulic pump main body via an HST line so as to form an HST in cooperation with the hydraulic pump main body, a motor volume adjusting mechanism that varies a suction/discharge amount of the hydraulic motor main body, a hydraulic actuating mechanism that operates the motor volume adjusting mechanism, and a housing that accommodates the hydraulic motor main body, the motor volume adjusting mechanism and the hydraulic actuating mechanism. The hydraulic actuating mechanisms in the pair of first motor devices and the pair of second motor devices are operated and controlled with use of hydraulic fluid from a single hydraulic pressure source.

In the hydraulic four-wheel-drive working vehicle according to the present invention, the four hydraulic motor main bodies in the pair of first motor devices and the pair of second motor devices can vary the respective suction/discharge amounts, as well as the hydraulic pump main body. Therefore, it is possible to change the variable range of the driving speed/driving torque of the driving wheels in accordance with the traveling situation.
Further, in the present invention, the four hydraulic actuating mechanisms that respectively operate the four motor volume adjusting mechanisms in the pair of first motor devices and the pair of second motor devices are operatively controlled by hydraulic fluid supplied from the single hydraulic pressure source. Accordingly, it is possible to synchronously vary with excellent controllability the suction/discharge amounts of the four hydraulic motor main bodies.

In one embodiment, the motor volume adjusting mechanism includes a motor movable swash plate that is slantable about a pivot axis orthogonal to a rotational axis line of the hydraulic motor main body, and a motor control shaft that has a first end supported in a rotatable manner around its axial line by the housing in a state of being operatively connected to the hydraulic actuating mechanism and a second end operatively connected to the motor movable swash plate. The motor control shaft is an eccentric shaft in which the second end has an axial line eccentric with that of the first end, so that the second end slants the motor movable swash plate around the pivot axis upon rotation of the first end around the axial line by the hydraulic actuating mechanism.

In the one embodiment, the hydraulic actuating mechanism preferably may include a piston accommodating space formed in the housing, a piston accommodated in the piston accommodating space in a movable manner in an axial line direction while liquid-tightly dividing the piston accommodating space into a pressure receiver chamber and a spring chamber that are respectively located on first and second sides in the axial line direction, and a bias member accommodated in the spring chamber so as to press the piston toward the first side in the axial line direction.
The hydraulic four-wheel-drive working vehicle further includes a speed-change switch valve that selectively takes, in accordance with a manual operation, a supply state of supplying hydraulic fluid from the hydraulic pressure source to the pressure receiver chamber and a discharge state of discharging hydraulic fluid from the pressure receiver chamber.
The piston is operatively connected to the first end of the motor control shaft so as to rotate the first end about the axial line in accordance with movement of the piston in the axial line direction.

More preferably, the working vehicle according to the present invention may include a sub speed-change operation member that outputs a manipulate signal in response to an manual operation thereto, and a control device that operatively controls the speed-change switch valve in accordance with the manipulate signal. In the preferable configuration, the hydraulic actuating mechanisms may include a position detector sensor that detects the position of the piston in the axial line direction.
The control device forcibly turns, regardless of the manipulate signal outputted from the sub speed-change operation member, the speed-change switch valve into the discharge state so that the piston is positioned at an initial position on the first side in the axial line direction by the biasing force of the biasing member, in a case where the four position detector sensors provided in the pair of first motor devices and the pair of second motor devices do not output the same signals one another.

The hydraulic pump unit may include an auxiliary pump main body that is operatively driven along with the hydraulic pump main body by the driving power source.
The hydraulic four-wheel-drive working vehicle may include a hydraulic fluid line having a first end fluidly connected to a discharge side of the auxiliary pump main body and a second end fluidly connected to a hydraulic device, a relief valve for setting hydraulic pressure of the hydraulic fluid line, a supply line having a first end fluidly connected to the hydraulic fluid line and a second end fluidly connected to a primary side of the speed-change switch valve, and a supply/discharge line having a first end fluidly connected to a secondary side of the speed-change switch valve and second ends fluidly connected to the respective pressure receiver chambers of the four piston accommodating spaces in the pair of first motor devices and the pair of second motor devices.
The speed-change switch valve fluidly connects the supply line to the supply/discharge line when being in the supply state, and blocks the second end of the supply line and drains the supply/discharge line when being in the discharge state.

More preferably, the housing may include a motor case main body formed with an opening that has a size allowing the hydraulic motor main body to pass therethrough, and a motor port block detachably connected to the motor case main body so as to close the opening and formed with a motor-side HST hydraulic fluid passage configuring a part of the HST line.
The housing is supported by a support frame facing a corresponding driving wheel in such a manner that the motor port block is located on an inner side than the support frame with respect to a vehicle widthwise direction.
The housing is formed with a supply/discharge fluid passage that configures a part of the supply/discharge line, and the supply/discharge fluid passage has a first end fluidly connected to the pressure receiver chamber and a second end opened to an outer surface to form a supply/discharge port that is positioned on an inner side than the support frame with respect to the vehicle widthwise direction.

The motor movable swash plate is provided with an engagement groove that is extended in a radial direction with the pivot axis as a reference.
The second end of the motor control shaft is engaged into the engagement groove so that the motor control shaft is movable in a radial direction but immovable in a circumferential direction relative to the motor movable swash plate with the pivot axis as a reference.
The axis line of the second end of the motor control shaft is positioned at a first position that is fallen on a virtual circular arc having a center coaxial with the pivot axis and passing through the axis line of the first end and that is positioned on a first side than a virtual reference line passing through the pivot axis and the axis line of the first end in a circumferential direction with the pivot axis as a reference at a time when the piston is positioned at a first moving end on the first side in the axial line direction, and is positioned at a second position that is fallen on the virtual circular arc and that is positioned on a second side than the virtual reference line in the circumferential direction with the pivot axis as a reference.

More preferably, the hydraulic actuating mechanism may further include first and second stopper members that are fixed to the housing so as to be independently position-adjustable with respect to the axial line direction of the piston.
The first stopper member is come into contact with the piston to define the first moving end of the piston on the first side in the axial line direction of the piston at the time when the second end of the motor control shaft is positioned at the first position.
The second stopper member is come into contact with the piston to define the second moving end of the piston on the second side in the axial line direction of the piston at the time when the second end of the motor control shaft is positioned at the second position.

In any one of the above various configurations, the HST line may include a forward-movement high-pressure line that supplies hydraulic fluid, which is discharged from the hydraulic pump main body at a forward movement of the vehicle, to the hydraulic motor main bodies of the pair of first motor devices, a connecting line that supplies hydraulic fluid, which is discharged from the hydraulic motor main bodies in the pair of first motor devices at the forward movement of the vehicle, to the hydraulic motor main bodies of the pair of second motor devices, and a forward-movement low-pressure line that returns hydraulic fluid, which is discharged from the hydraulic motor main bodies in the pair of second motor devices at the forward movement of the vehicle, to the hydraulic pump main body.
The connecting line may include a left-side connecting line that fluidly connects the hydraulic motor main bodies in the left-side first and second motor devices, a right-side connecting line that fluidly connects the hydraulic motor main bodies in the right-side first and second motor devices, and a driving-mode switching valve that selectively fluidly connects or fluidly disconnects the left-side and right-side connecting lines.

### BRIEF DESCRIPTION OF THE DRAWINGS

The above, and other objects, features and advantages of the present invention will become apparent from the detailed description thereof in conjunction with the accompanying drawings therein.
Fig. 1 is a side view of a hydraulic four-wheel-drive working vehicle according to a first embodiment of the present invention.
Fig. 2 is a hydraulic circuit diagram of the working vehicle shown in Fig. 1.
Fig. 3 is a vertical cross-sectional side view of a first motor device in the working vehicle shown in Figs. 1 and 2.
Fig. 4 is a horizontal cross-sectional partial view of the first motor device shown in Fig. 3.
Fig. 5 is a cross-sectional view taken along line V-V in Fig. 4.
Figs. 6A and 6B are cross-sectional views taken along line VI-VI in Fig. 4, and show states where a motor movable swash plate is positioned at a low speed position and a high speed position, respectively.
Fig. 7 is a cross-sectional view taken along line VII-VII in Fig. 5, and shows a state where a piston is positioned at a first moving end (low speed position).
Fig. 8 is a cross-sectional view taken along line VII-VII in Fig. 5, and shows a state where a piston is positioned at a second moving end (high speed position).
Fig. 9 is a partial hydraulic circuit diagram of a modified working vehicle of the first embodiment.
Fig. 10 is a plan view of a motor device in the working vehicle shown in Fig. 9.
Fig. 11 is a cross-sectional view taken along line XI-XI in Fig. 10.
Fig. 12 is a cross-sectional view taken along line XII-XII in Fig. 11.
Fig. 13 is a partial hydraulic circuit diagram of a working vehicle according to a modified embodiment of the present invention.
Fig. 14 is a partial hydraulic circuit diagram of a working vehicle according to another modified embodiment of the present invention.
Fig. 15 is a hydraulic circuit diagram of a working vehicle including first and second motor devices modified from the first and second motor devices in the first embodiment.
Fig. 16 is a partially cross-sectional view of the first motor device shown in Fig. 15.

### DETAILED DESCRIPTION OF THE PREFERRED EMBODIMENTS

### First embodiment

A preferred embodiment of the present invention will now be described with reference to the accompanying drawings.

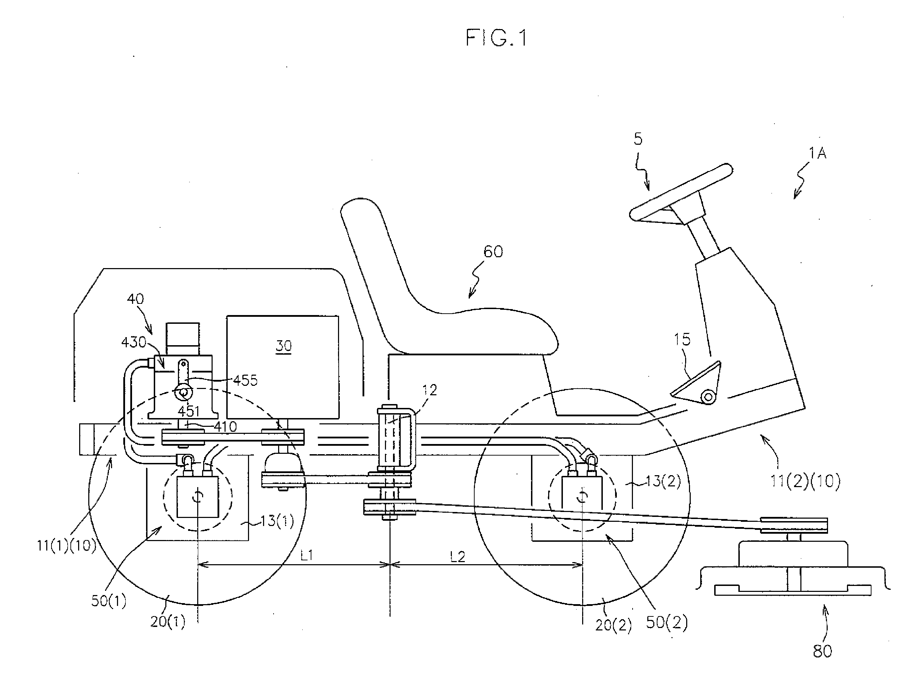

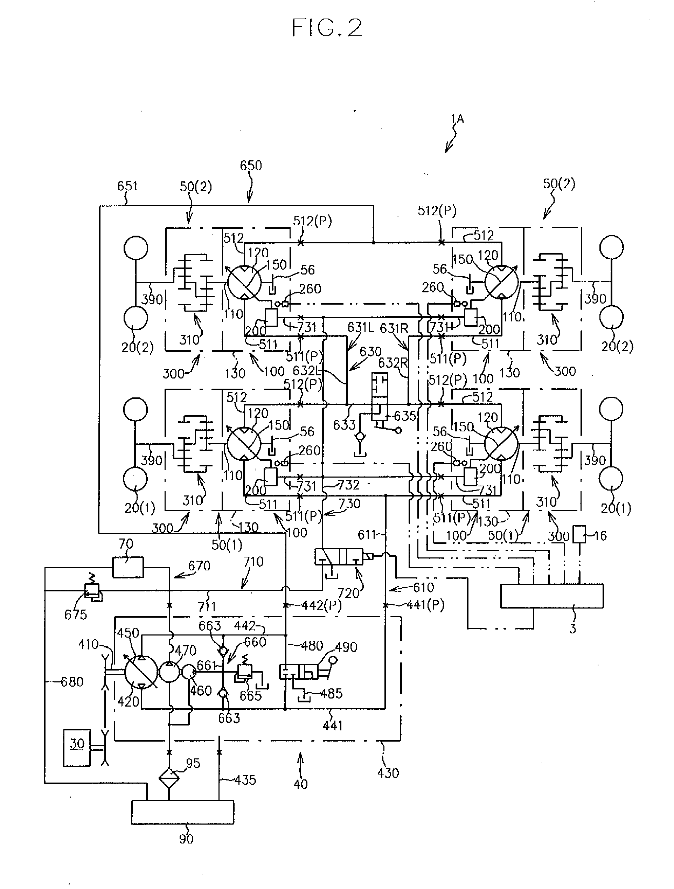

Figs. 1 and 2 respectively show a side view and a hydraulic circuit diagram of a hydraulic four-wheel-drive working vehicle 1A according to one embodiment of the present invention.

In the present embodiment, the working vehicle 1A is embodied by a riding lawn mower of an articulate type, as shown in Fig. 1.
Specifically, as shown in Figs. 1 and 2, the working vehicle 1A includes a vehicle frame 10 having a first frame 11(1) that is arranged on one side (a rear side in the present embodiment) in a vehicle lengthwise direction and a second frame 11(2) that is arranged on the other side (a front side in the present embodiment) in the vehicle lengthwise direction and that is connected to the first frame 11(1) in a swingable manner about a pivot shaft 12 extending in a substantially vertical direction; a driving power source 30 supported by one (the first frame 11(1) in the present embodiment) of the first and second frames 11(1), 11(2); a hydraulic pump unit 40 that has at least one hydraulic pump main body 420 operatively driven by the driving power source 30 and that is supported by the one frame; a driver's seat 60 supported by the vehicle frame 10 (the second frame 11(2) in the present embodiment); a pair of right and left first driving wheels 20(1) arranged on the one side (the rear side in the present embodiment) in the vehicle lengthwise direction; a pair of right and left second driving wheels 20(2) arranged on the other side (a front side in the present embodiment) in the vehicle lengthwise direction; a pair of first motor devices 50(1) respectively driving the pair of right and left first driving wheels 20(1), the pair of first motor devices 50(1) having the hydraulic motor main bodies 120 fluidly connected to the hydraulic pump main body 420 through an HST line and being supported by the vehicle frame 10 so as to face the corresponding first driving wheels 20(1); and a pair of second motor devices 50(2) respectively driving the pair of right and left second driving wheels 20(2), the pair of second motor devices 50(2) having the hydraulic motor main bodies 120 fluidly connected to the hydraulic pump main body 420 through the HST line and being supported by the vehicle frame 10 so as to face the corresponding second driving wheels 20(2).

In the present embodiment, as shown in Figs. 1 and 2, the working vehicle 1A further includes a steering member 5 such as a steering wheel that is arranged in vicinity of the driver's seat 60 and that is capable of being manually operated, a hydraulic steering mechanism 70 that swings the first frame 11(1) and the second frame 11(2) relatively to each other about the pivot shaft 12 in conjunction with a manual operation on the steering member 5, and a mower device 80 supported by the second frame 11(2) so as to be positioned on an outer side (a front side in the present embodiment) than the second driving wheels 20(2) in the vehicle lengthwise direction.

The first frame 11(1) includes, as shown in Fig. 1, a left-side first support frame 13(1) facing the left-side first driving wheel 20(1) and a right-side first support frame (not shown) facing the right-side first driving wheel 20(1).
Similarly, the second frame 11(2) includes, as shown in Fig. 1, a left-side second support frame 13(2) facing the left-side second driving wheel 20(2) and a right-side second support frame (not shown) facing the right-side second driving wheel 20(2).

In the present embodiment, the pivot shaft 12 is arranged at a center in the vehicle lengthwise direction between the pair of first driving wheels 20(1) and the pair of second driving wheels 20(2), as shown in Fig. 1.
That is, a length L1 in the vehicle lengthwise direction between a rotational center of the pair of first driving wheels 20(1) and the pivot shaft 12 is same as a length L2 in the vehicle lengthwise direction between a rotational center of the pair of second driving wheels 20(2) and the pivot shaft 12.

As shown in Figs. 1 and 2, the hydraulic pump unit 40 includes a pump shaft 410 operatively connected to the driving power source 30, the hydraulic pump main body 420 supported in a relatively non-rotatable manner by the pump shaft 410, and a pump case 430 for supporting the pump shaft 410 and forming a pump space that accommodates the hydraulic pump main body 420.

As shown in Fig. 2, the hydraulic pump main body 420 is fluidly connected to the four hydraulic motor main bodies 120 in the pair of first motor devices 50(1) and the pair of second motor devices 50(2) through the HST line so as to form HST in cooperation with the four hydraulic motor main bodies 120.
A hydraulic circuit including the HST line will be later described.

As shown in Fig. 2, the pump case 430 is provided with a pump-side forward-movement high-pressure hydraulic fluid passage 441 and a pump-side forward-movement low-pressure hydraulic fluid passage 442 both of which are fluidly connected to the hydraulic pump main body 420.

Specifically, the pump-side forward-movement high-pressure hydraulic fluid passage 441 has a first end fluidly connected to a discharge side of the hydraulic pump main body 420 from which hydraulic fluid is discharged at a time when the vehicle 1A travels in a forward direction, and a second end opened to an outer surface of the pump case to form a pump-side forward-movement high-pressure-side hydraulic fluid port 441(P).
The pump-side forward-movement low-pressure hydraulic fluid passage 442 has a first end fluidly connected to a suction side of the hydraulic pump main body 420 through which hydraulic fluid is suctioned at a time when the vehicle 1A travels in the forward direction, and a second end opened to the outer surface of the pump case to form a pump-side forward-movement low-pressure-side hydraulic fluid port 442(P).

In the present embodiment, the hydraulic pump unit 40 is configured so that suction/discharge amount of the hydraulic pump main body 420 can be varied based on an operation from the outside.
Specifically, the hydraulic pump unit 40 includes, in addition to the above components, a pump volume adjusting mechanism 450 for varying the suction/discharge amount of the hydraulic pump main body 420 based on the operation from outside, as shown in Fig. 2.

In the present embodiment, the hydraulic pump main body 420 is of an axial piston type. Therefore, the pump volume adjusting mechanism 450 includes a pump movable swash plate (not shown) for defining a reciprocating movement range of pistons in the hydraulic pump main body 420, and a pump control shaft 451 (see Fig. 1) operatively connected to the pump movable swash plate so as to slant the same.

As shown in Fig. 1, the pump control shaft 451 is operatively connected to a main speed-change operation member 15 that is capable of being manually operated and that is arrange in the vicinity of the driver's seat 60 by way of a pump control arm 455 and a connecting member (not shown).
That is, the main speed-change operation member 15 and the pump volume adjusting mechanism 450 function as a main speed-change operation mechanism for changing a traveling speed of the working vehicle 1A.

In the present embodiment, the pump movable swash plate is capable of slanting in both forward and rearward directions with a neutral position in between.
Specifically, the pump movable swash plate slants in the forward direction upon the operation of the main traveling speed-change operation member 15 in the forward direction, and the pump movable swash plate slants in the rearward direction upon the operation of the main traveling speed-change operation member 15 in the rearward direction. In the present embodiment, the main speed-change operation member 15 is of a seesaw pedal type, but may be of a two-pedal type including a dedicated forward pedal and a dedicated rearward pedal.

As shown in Fig. 2, the pump case 430 is provided with a bypass fluid passage 480 for fluidly connecting the pump-side forward-movement high-pressure hydraulic fluid passages 441 and the pump-side forward-movement low-pressure hydraulic fluid passage 442, a drain fluid passage 485 having a first end opened to an internal fluid sump of the pump case 430, and a bypass valve 490 that is interposed in the bypass fluid passage 480 in a state capable of being operated from the outside.
The bypass valve 490 is configured to take a shutoff position of shutting off the bypass fluid passage 480 and fluidly disconnecting the drain fluid passage 485 to the bypass fluid passage 480, and a communicating position of communicating the bypass fluid passage 480 and fluidly connecting the drain fluid passage 485 to the bypass fluid passage 480.

Furthermore, in the present embodiment, the hydraulic pump unit 40 includes, in addition to the above components, first and second auxiliary pump main bodies 460, 470, both of which are operatively driven by the pump shaft 410.
As shown in Fig. 2, the first auxiliary pump main body 460 functions as a charge pump for replenishing the HST with hydraulic fluid.
The second auxiliary pump main body 470 supplies hydraulic fluid to the hydraulic steering mechanism 70 as well as to a below described hydraulic actuating mechanism 200.
The first auxiliary pump main body 460 may be embodied, for example, by a trochoidal pump, and the second auxiliary pump main body 470 may be embodied, for example, by a gear pump.

As shown in Fig. 2, the working vehicle 1A includes an external reservoir tank 90, and the first and second auxiliary pump main bodies 460, 470 operate with the external tank 90 as the fluid source.
Reference numeral 435 in Fig. 2 designates a drain conduit for fluidly connecting the internal fluid sump of the pump case 430 to the external reservoir tank 90. Reference numeral 95 designates a filter interposed in a suction line for the first and second auxiliary pump main bodies 460, 470.

The pair of first motor devices 50(1) and the second motor devices 50(2) will now be described.
The pair of first motor devices 50(1) are supported by the right-side and left-side first support frames 13(1) (see Fig. 1), respectively, so as to face the corresponding first driving wheels 20(1).
The pair of second motor devices 50(2) are supported by the right-side and left-side second support frames 13(2) (see Fig. 1), respectively, so as to face the corresponding second driving wheels 20(1).

In the present embodiment, the first and second motor devices 50(1), 50(2) have the same configuration to each other.
Therefore, the following explanation is made on the first motor device 50(1), and the same reference numerals or the same reference numerals with replacing the parenthetical reference (1) with (2) are denoted for the same components as those of the second motor device 50(2) to omit the explanation thereof.

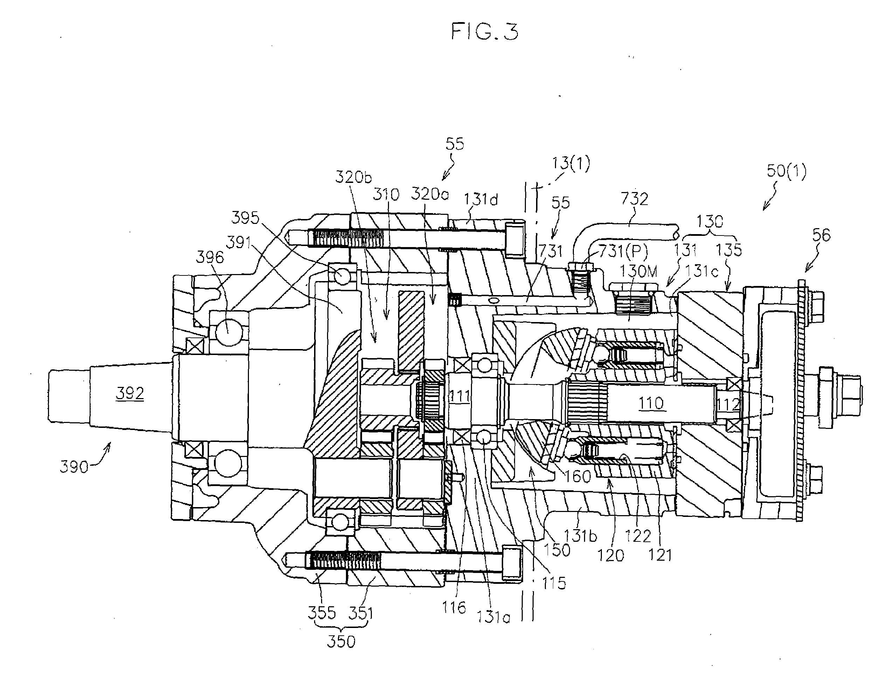

Fig. 3 is a vertical cross-sectional side view of the first motor device 50(1).

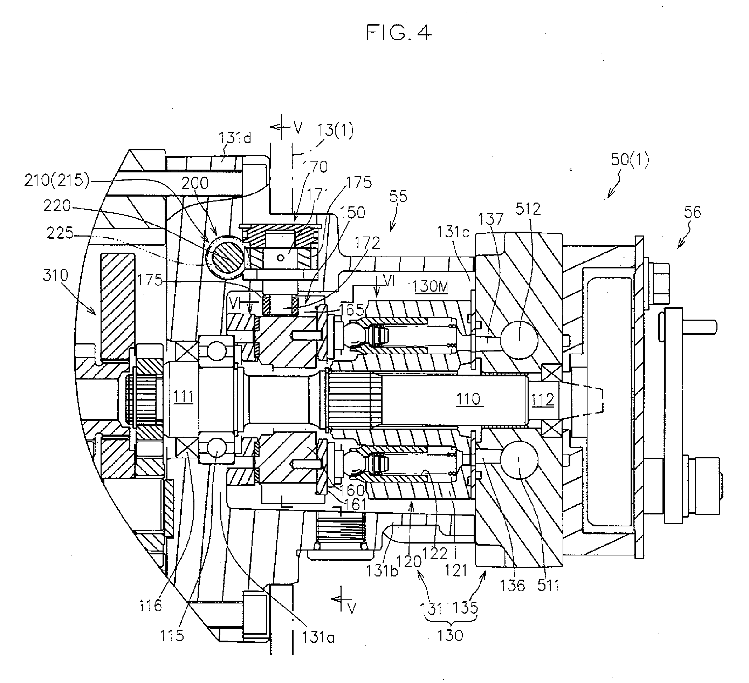

Fig. 4 is a horizontal cross-sectional partial view of the first motor device 50(1).

As shown in Figs. 2-4, the first motor device 50(1) includes the hydraulic motor main body 120 fluidly connected to the hydraulic pump main body 420 through the HST line, a motor volume adjusting mechanism 150 for varying the suction/discharge amount of the hydraulic motor main body 120, the hydraulic actuating mechanism 200 that actuates the motor volume adjusting mechanism 150, and a housing 55 that accommodates the hydraulic motor main body 120, the motor volume adjusting mechanism 150 and the hydraulic actuating mechanism 200.

In the present embodiment, the first motor device 50(1) is configured so as to reduce the rotational speed of the rotational power of the hydraulic motor main body 120 and output the same to the corresponding driving wheel.
Specifically, as shown in Figs. 2-4, the first motor device 50(1) includes a hydraulic motor unit 100 that has the hydraulic motor main body 120, the motor volume adjusting mechanism 150 and the hydraulic actuating mechanism 200, a reduction gear unit 300 that has a reduction gear mechanism 310 for reducing the rotational speed of the rotational power output by the hydraulic motor main body 120, and an output member 390 that outputs the rotational power whose speed has been reduced by the reduction gear mechanism 310 towards the corresponding driving wheel 20(1).

As shown in Figs. 2-4, the hydraulic motor unit 100 includes the hydraulic motor main body 120, the motor volume adjusting mechanism 150, the hydraulic actuating mechanism 200, a motor case 130 that functions as a part of the housing 55 and that forms a motor space 130M for accommodating the hydraulic motor main body 120 and the motor volume adjusting mechanism 150, and a motor shaft 110 that is supported in a rotatable manner about its axis line by the motor case 130 while supporting the hydraulic motor main body 120 in a relatively non-rotatable manner.

As shown in Figs. 3 and 4, the hydraulic motor main body 120 includes a motor cylinder block 121 supported by the motor shaft 110 in a relatively non-rotatable manner, and a plurality of motor pistons 122 supported by the motor cylinder block 121 in a relatively non-rotatable about the axis line and in a reciprocating manner along the axis line.

The motor case 130 includes a hollow motor case main body 131 formed with an opening 131c that has a size allowing the hydraulic motor main body 120 to pass therethrough, and a motor port block 135 detachably connected to the motor case main body 131 so as to close the opening 165 to form the motor space 130M.

As shown in Fig. 2, the motor case 130 is formed with a motor-side forward-movement high-pressure hydraulic fluid passage 511 and a motor-side forward-movement low-pressure hydraulic fluid passage 512, both of which forms a part of the HST line.
The motor-side forward-movement high-pressure hydraulic fluid passage 511 has a first end fluidly connected to a suction side of the hydraulic motor main body 120 through which hydraulic fluid is suctioned at a time when the vehicle 1A travels in the forward direction, and a second end opened to an outer surface of the motor case to form a motor-side forward-movement high-pressure-side hydraulic fluid port 511(P).
The motor-side forward-movement low-pressure hydraulic fluid passage 512 has a first end fluidly connected to a discharge side of the hydraulic motor main body 120 through which hydraulic fluid is discharge at a time when the vehicle 1A travels in the forward direction, and a second end opened to the outer surface of the motor case to form a motor-side forward-movement low-pressure-side hydraulic fluid port 512(P).
As shown in Fig. 4, the motor-side forward-movement high-pressure and low-pressure hydraulic fluid passages 511, 512 are formed in the motor port block 135 in the present embodiment.

Specifically, the motor port block 135 is formed with a first kidney port 136 opened to a motor sliding surface with which the hydraulic motor main body 120 is brought into contact in a sliding manner around the axis direction, a second kidney port 137 opened to the motor sliding surface on a side opposite to the first kidney port 136 with the motor shaft 110 in between, the motor-side forward-movement high-pressure hydraulic fluid passage 511 having the first end fluidly connected to the hydraulic motor main body 120 through the first kidney port 136 and the second end forming the motor-side forward-movement high-pressure-side hydraulic fluid port 511(P), and the motor-side forward-movement low-pressure hydraulic fluid passage 512 having the first end fluidly connected to the hydraulic motor main body 120 through the second kidney port 502 and the second end forming the motor-side forward-movement low-pressure-side hydraulic fluid port 512(P).

As shown in Figs. 3 and 4, the motor case main body 131 includes an end wall 131a extending in a direction substantially orthogonal to the motor shaft 110, and a peripheral wall 131b extending in the axis line of the motor shaft 110 from the end wall 131a, wherein a free end side of the peripheral wall 131b forms the opening 131c.

In the present embodiment, the motor case main body 131 is configured, as shown in Figs. 3 and 4, so that the end wall 131a has a peripheral edge 131d extending radially outward than the peripheral wall 131b, where the peripheral edge 131d of the end wall 131a acts as an attachment flange for attaching the first motor device 50(1) to the support frame 13(1).
The motor case main body 131 is also formed with a drain port for fluidly connecting the motor space 130M to the external reservoir tank 90 via a conduit.

As shown in Figs. 3 and 4, the motor shaft 110 is supported in a rotatable manner about the axis line by the motor case 130 in a state of supporting the hydraulic motor main body 120 in a relatively non-rotatable manner within the motor space 130M defined by the motor case main body 131 and the motor port block 135 and also in a state of having a first end 111 on a side closer to the corresponding driving wheel 20(1) that extends outward from the motor case 130.

Specifically, the end wall 131a of the motor case main body 131 is formed with a supporting hole for supporting the first end 111 of the motor shaft 110.
As described above, the first end 111 of the motor shaft 110 is extended outward from the motor case main body 131. Therefore, the supporting hole is formed as a pass-through hole. The motor shaft 110 is supported in a rotatable manner about the axis line by the end wall 131a through a bearing member 115 arranged in the supporting hole in a state that the first end 111 extends outward through the first supporting hole.
A reference numeral 116 in Figs. 3 and 4 is a sealing member for liquid-tightly sealing the supporting hole.

A second end 112 of the motor shaft 110 on a side away from the corresponding the driving wheel 20(1) is supported in a rotatable manner about the axis line by the motor port block 135.
Specifically, the motor port block 135 is formed with a supporting hole for supporting the second end 112 of the motor shaft 110.

In the present embodiment, the second end 112 of the motor shaft 110 has an outward-extending portion that extends outward from the motor port block 135.
The outward-extending portion functions as a braking power receiving portion to which a brake mechanism 56 attached to the first motor device 50(1) applies a braking force.

That is, the first motor device 50(1) includes, in addition to the above components, the brake mechanism 56, as shown in Fig. 3.
The brake mechanism 56 is configured to selectively apply the braking force to the motor shaft 110, which has the rotational power with the rotational speed before being reduced by the reduction gear mechanism 310.
The configuration makes it possible to reduce a braking capacity to be needed for the brake mechanism 56, thereby downsizing the brake mechanism 56.
In the present embodiment, the brake mechanism 56 is embodied by an internal expanding drum brake as shown in Fig. 3, but in place thereof, may be embodied by another type brakes such a disc brake, a band brake or the like.

Either the pair of first motor devices 50(1) or the pair of second motor devices 50(2) could omit the brake mechanism 56.
For example, it is possible to provide the pair of second motor devices 50(2) with the brake mechanisms 56 and omit the brake mechanism 56 in the pair of first motor devices 50(1).

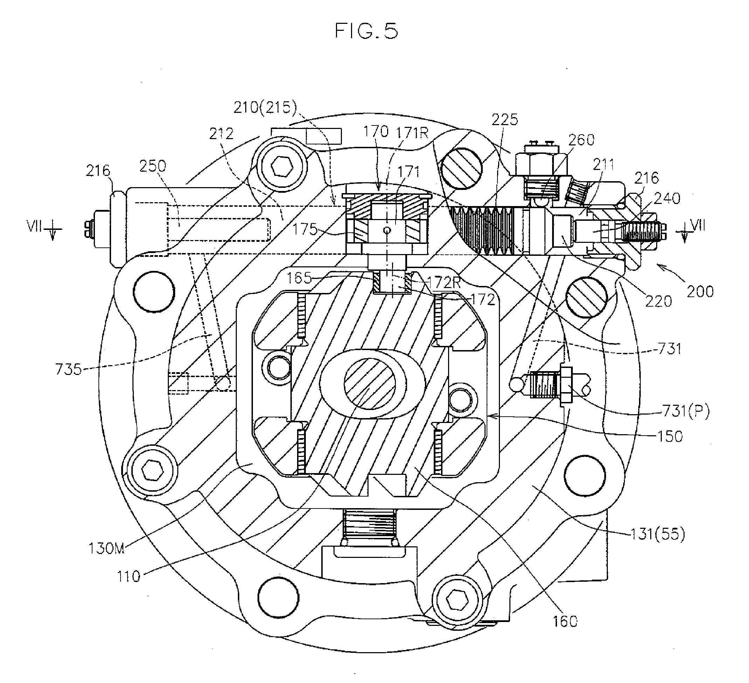

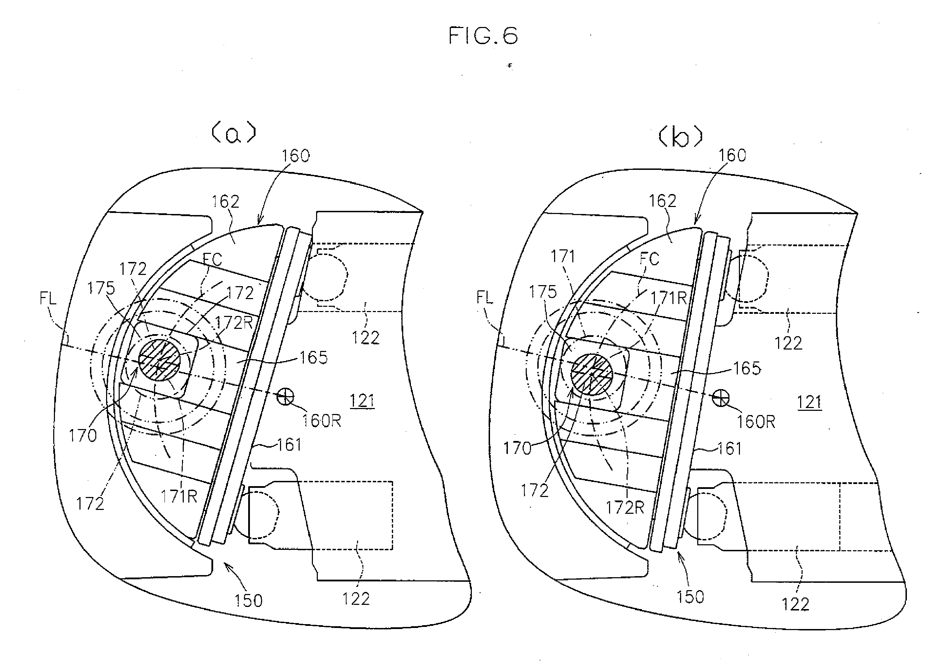

Figs. 5 and 6 are cross-sectional views taken along line V-V and VI-VI in Fig. 4, respectively.
The motor volume adjusting mechanism 150 includes, as shown in Figs.3-5, 6A and 6B, a motor movable swash plate 160 that is slantable about a pivot axis 160R orthogonal to the motor shaft 110 so as to change reciprocating movement ranges of motor pistons 122, and a motor control shaft 170 that is supported in a rotatable manner around its axis line by the housing 55 (the motor case main body 131 in the present embodiment) so as to be in parallel with the pivot axis 160R and that slants the motor movable swash plate 160 about the pivot axis 160R in accordance with rotation about the axis line based on an operation from outside.
Figs. 6A and 6B show the motor movable swash plate 160 that is located at a low speed position and at a high speed position, respectively.

Specifically, the motor movable swash plate 160 is slantable about the pivot axis 160R (see Figs. 6A and 6B) while being engaged directly or indirectly with free ends of the motor pistons 122, so that the motor movable swash plate 160 varies the reciprocating movement ranges of the motor pistons 122 in accordance with a slant angle of the motor movable swash plate 160 about the pivot axis 160R.

As shown in Figs. 4, 5, 6A, and 6B, the motor control shaft 170 has a first end 171 that is supported by the housing 55 (the motor case main body 131 in the present embodiment) in a rotatable manner about an axis line 171R, and a second end 172 that is engaged with the motor movable swash plate 160 so as to slant the motor movable swash plate 160 about the pivot axis 160R in accordance with rotation of the first end 171 about the axis line 171R.

As shown in Figs. 5, 6A, and 6B, the second end 172 is eccentric with respect to the first end 171, and is engaged into an engagement groove 165 that is formed in the motor movable swash plate 160.
More precisely, as shown in Figs. 4, 6A, and 6B, the motor movable swash plate 160 has a piston engagement surface 161 that faces in a direction parallel to the motor shaft 110 and that is engaged directly or indirectly with the free ends of the motor pistons 122, and a control end surface 162 that faces in a direction parallel to the pivot axis 160R so as to face the motor control shaft 170.

As shown in Figs. 6A and 6B, the engagement groove 165 is formed in the control end surface 162 so as to be extended in a radial direction with the pivot axis 160R as a reference.
The second end 172 of the motor control shaft 170, which has an axis line 172R that is eccentric with respect to the axis line 171R of the first end 171 (see Figs. 5, 6A, and 6B), is engaged into the engagement groove 165 so as to be movable in a radial direction but immovable in a circumferential direction relative to the motor movable swash plate 160 with the pivot axis 160R as a reference.
In the present embodiment, the second end 172 is engaged into the engagement groove 165 via an outserted member 173 that is inserted around the second end 172 and that has a rectangular shape in planar view.

In the motor control shaft 170 thus configured, when the first end 171 is rotated about the axis line 171R, the second end 172 is rotated about the axis line 171R of the first end 171, so that the motor movable swash plate 160 is slanted about the pivot axis 160R.

The hydraulic actuating mechanism 200 is configured so as to rotate the first end 171 of the motor control shaft 170 about the axis line 171R with use of the function of hydraulic pressure.

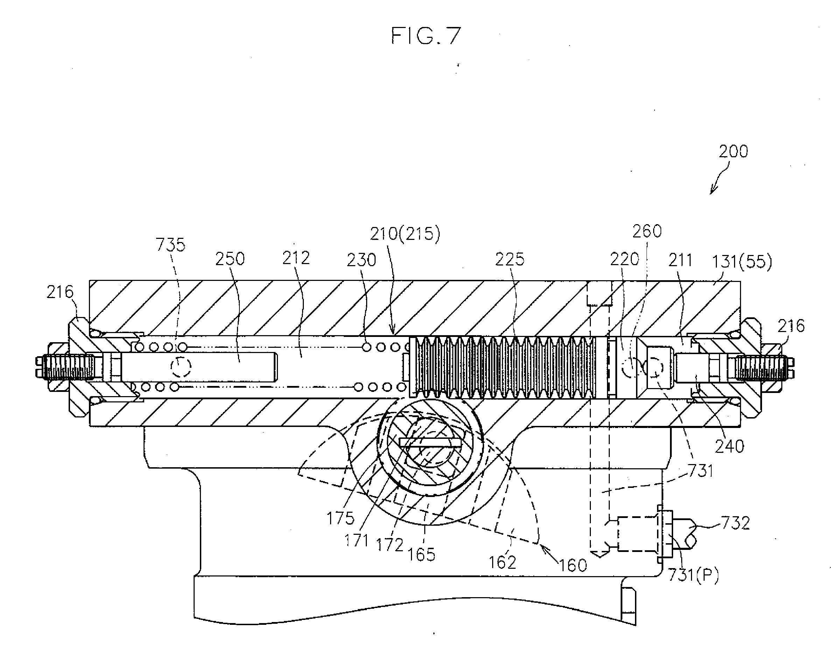

Fig. 7 is a cross-sectional view taken along line VII-VII in Fig. 5.

As shown in Figs. 5 and 7, the hydraulic actuating mechanism 200 includes a piston accommodating space 210 that is formed in the housing 55 (the motor case main body 131 in the present embodiment) so as to be extended in a direction orthogonal to both of the axial line directions of the motor shaft 110 and the motor control shaft 170, a piston 220 that is accommodated in the piston accommodating space 210 in a movable manner in an axial line direction while liquid-tightly dividing the piston accommodating space 210 into a pressure receiver chamber 211 located on a first side in the axial line direction and a spring chamber 212 located on a second side in the axial line direction, and a bias member 230 that is accommodated in the spring chamber 212 so as to press the piston 220 toward the first side in the axial line direction.

In the present embodiment, as shown in Figs. 4, 5, and 7, the end wall 131a of the motor case main body 131 is formed with a boring 215 that is extended in a direction orthogonal to both of the axial line directions of the motor shaft 110 and the motor control shaft 170 and that has both ends opened to the outer surface.
The both ends of the boring 215 are closed with cap members 216 respectively, so as to configure the piston accommodating space 210.

Fluidly connected to the pressure receiver chamber 211 is a supply/discharge fluid passage 731 which is to be described later, and hydraulic fluid is supplied or discharged by way of the supply/discharge fluid passage 731.
As shown in Fig. 5, the spring chamber 212 is opened to the atmospheric pressure through an open hole 735, so that the piston 220 is smoothly moved in the axial line direction.
In the present embodiment, the open hole 735 is formed so as to communicate the spring chamber 212 to the motor space 130M.

The piston 220 is operatively connected to the first end 171 of the motor control shaft 170 such that the first end 171 is rotated about the axis line 171R upon the movement of the piston 220 in the axial line direction.
In the present embodiment, as shown in Figs. 4, 5, and 7, the first end 171 of the motor control shaft 170 is provided with a gear 175 in a relatively non-rotatable manner and the piston 220 is provided with a rack 225 that is engaged with the gear 175, so that the first end 171 of the motor control shaft 170 is rotated about the axis line 171R upon the movement of the piston 220 in the axial line direction.

In the present embodiment, the hydraulic actuating mechanism 200 is configured so as to be capable of selectively switching a low speed mode (refer to Fig. 6A) of having the motor movable swash plate 160 positioned at a low speed position where the slant angle of the movable swash plate 160 from the neutral position is large, or a high speed mode (refer to Fig. 6B) of having the motor movable swash plate 160 positioned at a high speed position where the slant angle of the movable swash plate 160 from the neutral position is small.
When the motor movable swash plate 160 is positioned at the low speed position, the suction/discharge amount of the hydraulic motor main body 120 becomes large, so that the rotational speed of the hydraulic motor main body 120 is decreased with respect to a predetermined hydraulic fluid amount supplied from the hydraulic pump main body 420.
When the motor movable swash plate 160 is, on the other hand, positioned at the high speed position, the suction/discharge amount of the hydraulic motor main body 120 becomes small, so that the rotational speed of the hydraulic motor main body 120 is increased with respect to the predetermined hydraulic fluid amount supplied from the hydraulic pump main body 420.

Specifically, the hydraulic actuating mechanism 200 has, in addition to the above described components, a first stopper member 240 that defines a first moving end of the piston 220 on the first side in the axial line direction, and a second stopper member 250 that defines a second moving end of the piston 220 on the second side in the axial line direction.

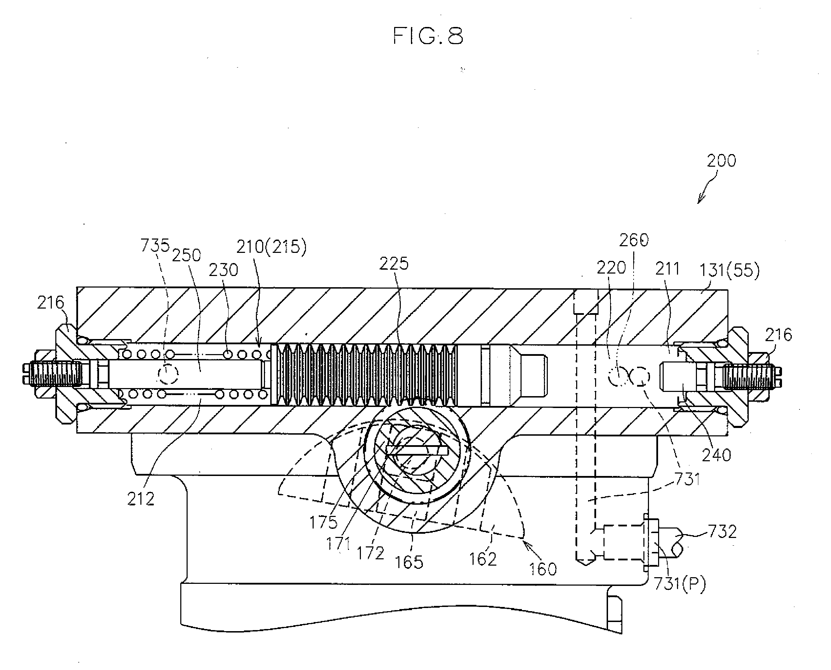

Fig. 8 is a cross sectional view, in correspondence with Fig. 7, of the piston 220 in a state of being positioned at the second moving by hydraulic pressure of hydraulic fluid supplied from the hydraulic pressure source against the biasing force of the bias member 230.

Preferably, the motor control shaft 170 is configured in such a manner that, when the piston 220 is positioned at the first moving end and then the motor movable swash plate 160 is positioned at the low speed position, the axis line 172R of the second end 172 of the motor control shaft 170 is positioned at a first position that is fallen on a virtual circular arc FC having a center coaxial with the pivot axis 160R and passing through the axis line 171R of the first end 171 and that is positioned on a first side than a virtual reference line FL passing through the pivot axis 160R and the axis line 171R of the first end 171 in a circumferential direction with the pivot axis 160R as a reference (refer to Fig. 6A).
The motor control shaft 170 is also configured in such a manner that, when the motor movable swash plate 160 is positioned at the high speed position, the axis line 172R of the second end 172 is positioned at a second position that is fallen on the virtual circular arc FC and that is positioned on a second side than the virtual reference line FL in the circumferential direction with the pivot axis 160R as a reference (refer to Fig. 6B).

The preferable configuration makes it possible to stably keep the motor movable swash plate 160 at the high speed position and the low speed position.
More specifically, during the hydraulic motor main body 120 is driven to be rotated about its rotational axis by hydraulic fluid supplied from the hydraulic pump main body 420, the hydraulic fluid supplied from the hydraulic pump main body 420 to the hydraulic motor main body 120 acts on the motor movable swash plate 160 so as to press the motor movable swash plate 160 toward the neutral position.
That is, the motor movable swash plate 160 is constantly pressed toward the neutral position by hydraulic fluid. Therefore, there is required a retaining force, which acts so as to press the motor movable swash plate 160 against the biasing force (hereinafter, referred to as a neutrally directed biasing force) by hydraulic fluid in the neutral position, in order to keep the motor movable swash plate 160 at a predetermined slanting position.

As already described, in the present embodiment, the second end 172 of the motor control shaft 170 is engaged into the engagement groove 165 is formed in the motor movable swash plate 160, while being eccentric with respect to the first end 171.
In this configuration, if the second end 172 is applied with a force of rotating the second end 172 about the axis line 171R of the first end 171, the motor movable swash plate 160 positioned at the high speed position or at the low speed position is slanted about the pivot axis 160R.
In other words, if the motor control shaft 170 is configured in such a manner that the second end 172 is not applied with a force of rotating the second end 172 about the axis line 171R of the first end 171 when the motor movable swash plate 160 is positioned at the high speed position and the low speed position, the motor movable swash plate 160 can be kept at the position.

That is, in a configuration that does not allow the neutrally directed biasing force to function as the force of rotating the second end 172 about the axis line 171R of the first end 171, the motor movable swash plate 160 can be stably kept at the high speed position and the low speed position.

In this regard, the present embodiment is configured so that the axis line 172R of the second end 172 of the motor control shaft 170 is located on the virtual circular arc FC when the motor movable swash plate 160 is located at the high speed position and the low speed position, described above. Accordingly, it is possible to have the neutrally directed biasing force along the virtual circular arc FC directed substantially in parallel with a straight line passing through the axis line 172R of the second end 172 and the axis line 171R of the first end 171.
Thus, the configuration of the present embodiment makes it possible to prevent as much as possible the neutrally directed biasing force from functioning as the force of rotating the second end 172 about the axis line 171R of the first end 171, thereby stably keeping the motor movable swash plate 160 at the high speed position and the low speed position.

More preferably, the first and second stopper members 240 and 250 are fixed directly or indirectly to the housing 55 so as to be independently position-adjustable along the axial line direction of the piston 220.
The preferable configuration makes it possible to easily adjust the positions where the first and second stopper members 240 and 250 should be fixed such that the piston 220 is brought into contact with the first stopper member 240 and the second stopper member 250 respectively when the axis line 172R of the second end 172 is located at the first position and at the second position on the virtual circular arc FC.
In the present embodiment, the first and second stopper members 240 and 250 are screwed into the respective cap members 216 that close the both ends of the boring 215 for forming the piston accommodating space 210, so that the first and second stopper members 240 and 250 are fixed to the housing 55 in a position-adjustable manner along the axial line direction of the piston 220.

The reduction gear unit 300 includes, as shown in Figs. 2 and 3, the reduction gear mechanism 310, and a gear case 350 that forms a part of the housing 55 and that is detachably connected to the motor case 130 so as to form a gear space for accommodating the reduction gear mechanism 310.

In the present embodiment, the reduction gear mechanism 310 includes first and second planetary gear mechanisms 320a, 320b arranged in series with each other.

Specifically, the supporting hole of the motor case 130 is formed as the pass-through hole for allowing the first end 111 of the motor shaft 110 to project into the gear space, as described above.
The reduction gear mechanism 310 is configured to reduce the speed of the rotational power output from the first end 111 of the motor shaft 110 and transmit the rotational power whose speed has been reduced toward the output member 390.

The first planetary gear mechanism 220a includes a first sun gear supported in a relatively non-rotatable manner by the first end 111 of the motor shaft 110, a first planetary gear that engages with the first sun gear so as to revolve around the first sun gear, a first carrier that supports the first planetary gear in a relatively rotatable manner and that revolves around the first sun gear according to the revolution of the first planetary gear, and a first internal gear that engages with the first planetary gear.
The second planetary gear mechanism 220b includes a second sun gear operatively connected to the first carrier, a second planetary gear that engages with the second sun gear so as to revolve around the second sun gear, a second carrier that supports the second planetary gear in a relatively rotatable manner and that revolves around the second sun gear according to the revolution of the second planetary gear, and a second internal gear that engages with the second planetary gear.

The first and second internal gears are fixed in a non-rotatable manner.
In the present embodiment, the first and second internal gears are integrally formed with an inner circumferential surface of a hollow member 351 that forms a part of the gear case 350, as shown in Fig. 3.

Specifically, the gear case 350 includes the hollow member 351 having both ends opened, and a gear case main body 355 connected to the motor case 130 with the hollow member 351 sandwiched therebetween.
The gear case main body 355 has a hollow shape in which one side away from the corresponding driving wheel 20(1) is opened and the other side close to the corresponding driving wheel 20(1) is closed by an end wall.

As shown in Fig. 3, the output member 390 includes a flange part 391 connected to the second carrier so as to rotate about the axis line upon the revolution of the second carrier about the second sun gear, and an output shaft part 392 that extends from the flange part 391 in a direction towards the corresponding driving wheel 20(1) and that has a free end extended outward.
In the illustrated embodiment, the output shaft part 392 and the flange part 391 are integrally formed with each other.

In the present embodiment, the output member 390 is supported at two points including a first bearing member 395 arranged between an inner circumferential surface of the gear case 350 and an outer circumferential surface of the flange part 391, and a second bearing member 396 arranged between the inner circumferential surface of the gear case 350 and an outer circumferential surface of the output shaft part 392.

As described above, in the present embodiment, the reduction gear mechanism 310 reduces the speed of the rotational power output by the hydraulic motor main body 120 and the rotational power whose speed has been reduced by the reduction gear mechanism 310 is transmitted to the corresponding driving wheel 20(1), and therefore a low-torque/ high-rotation hydraulic motor main body such as an axial piston type can be used as the hydraulic motor main body 120. Accordingly, the arrangement makes it possible to achieve miniaturization of the hydraulic motor main body 120 and reduction of hydraulic fluid leakage amount from the hydraulic motor main body 120 so that the transmission efficiency of the HST could be enhanced.

The hydraulic circuit of the working vehicle 1A including the HST line will now be described.
The HST line fluidly connects the hydraulic motor main bodies 120 of the pair of first motor devices 50(1) and the hydraulic motor main bodies of the pair of second motor devices 50(2) in series with respect to the single hydraulic pump main body 420.

Specifically, the HST line includes a forward-movement high-pressure line 610 that supplies the hydraulic fluid, which is discharged from the hydraulic pump main body 420 at the forward movement of the vehicle, to the hydraulic motor main bodies 120 of the pair of first motor devices 50(1), a connecting line 630 that supplies the hydraulic fluid, which is discharged from the hydraulic motor main bodies 120 in the pair of first motor devices 50(1) at the forward movement of the vehicle, to the hydraulic motor main bodies 120 of the pair of second motor devices 50(2), and a forward-movement low-pressure line 650 that returns the hydraulic fluid, which is discharged from the hydraulic motor main bodies 120 in the pair of second motor devices 50(s) at the forward movement of the vehicle, to the hydraulic pump main body 420.

The forward-movement high-pressure line 610 includes, as shown in Fig. 2, the pump-side forward-movement high-pressure hydraulic fluid passage 441, the motor-side forward-movement high-pressure hydraulic fluid passages 511 in the pair of first motor devices 50(1), and a forward-movement high-pressure conduit 611 that fluidly connects the motor-side forward-movement high-pressure-side hydraulic fluid ports 511(P) in the pair of first motor devices 50(1) in series with respect to the pump-side forward-movement high-pressure-side hydraulic fluid port 441(P).

The connecting line 630 includes, as shown in Fig. 2, the motor-side forward-movement low-pressure hydraulic fluid passages 512 in the pair of first motor devices 50(1) and the motor-side forward-movement high-pressure hydraulic fluid passages 511 in the pair of second motor devices 50(2), and is configured so as to supply the hydraulic fluid, which is discharged from the motor-side forward-movement low-pressure-side hydraulic fluid ports 512(P) in the pair of first motor devices 50(1), to the motor-side forward-movement high-pressure-side hydraulic fluid ports 511(P) in the pair of second motor devices 50(2).

The forward-movement low-pressure line 650 includes, as shown in Fig. 2, the motor-side forward-movement low-pressure hydraulic fluid passages 512 in the pair of second motor devices 50(2), the pump-side forward-movement low-pressure hydraulic fluid passage 442 in the hydraulic pump unit 40, and a forward-movement low-pressure conduit 651 that that fluidly connects the motor-side forward-movement low-pressure-side hydraulic fluid ports 512(P) in the pair of second motor devices 50(2) in series with respect to the pump-side forward-movement low-pressure-side hydraulic fluid port 442(P).

Preferably, the connecting line 630 includes, as shown in Fig. 2, a left-side connecting line 631L that fluidly connects the hydraulic motor main bodies 120 in the left-side first motor device 50(1) and the left-side second motor device 50(2) to each other, a right-side connecting line 631R that fluidly connects the hydraulic motor main bodies 120 in the right-side first motor device 50(1) and the right-side second motor device 50(2) to each other, and a driving-mode switching valve 635 that selectively fluidly connects or fluidly disconnects the left-side and right-side connecting lines 631L, 631R to each other.

The preferable configuration makes it possible to selectively realize a right-left differential/front-rear differential state and a right-left differential/front-rear differential-lock state. At the right-left differential/front-rear differential state, the pair of hydraulic motor main bodies 120 in the pair of first motor devices 50(1) are driven in a hydraulically-differential manner to each other, and the pair of hydraulic motor main bodies 120 in the pair of second motor devices 50(1) are driven in a hydraulically-differential manner to each other. On the other hand, at right-left differential/front-rear differential-lock state, the left-side pair of front and rear hydraulic motor main bodies 120 in the left-side first and second motor devices 50(1), 50(2), and the right-side pair of front and rear hydraulic motor main bodies 120 in the right-side first and second motor devices 50(1), 50(2) are driven in a hydraulically-differential manner according to a load proportion to each other.

When the left-side and right-side connecting lines 631L, 631R are fluidly connected to each other by the driving-mode switching valve 635, the hydraulic fluid discharged from the hydraulic pump main body 420 is supplied in a distributed manner to the pair of right and left hydraulic motor main bodies 120 in the pair of first motor devices 50(1) according to a load proportion between the pair of right and left hydraulic motor main bodies 120. The hydraulic fluid discharged from the pair of right and left hydraulic motor main bodies 120 in the pair of first motor devices 50(1) is flown together through the driving-mode switching valve 635 and then is supplied in a distributed manner to the pair of right and left hydraulic motor main bodies 120 in the pair of second motor devices 50(2) according to a load proportion between the pair of right and left hydraulic motor main bodies 120.
Specifically, when the driving-mode switching valve 635 is in a fluidly connecting state, it is achieved the right-left differential/front-rear differential state in which the pair of hydraulic motor main bodies 120 in the pair of first motor devices 50(1) are driven in a hydraulically-differential manner according to a load proportion to each other, and the pair of hydraulic motor main bodies 120 in the pair of second motor devices 50(1) are driven in a hydraulically-differential manner according to a load proportion to each other.

On the other hand, when the left-side and right-side connecting lines 631L, 631R are fluidly disconnected to each other by the driving-mode switching valve 635, the hydraulic fluid discharged from the hydraulic pump main body 420 is supplied in a distributed manner to a left-side hydraulic line and a right-side hydraulic line according to a load proportion therebetween (that is, a proportion between the total load of the left-side pair of front and rear hydraulic motor main bodies 120 in the left-side first and second motor devices 50(1), 50(2) and the total load of the right-side pair of front and rear hydraulic motor main bodies 120 in the right-side first and second motor devices 50(1), 50(2)).
Specifically, when the driving-mode switching valve 635 is in a fluidly disconnecting state, it is achieved the right-left differential/front-rear differential-lock state in which all of the hydraulic fluid discharged from the hydraulic motor main body 120 in the left-side first motor device 50(1) is supplied to the hydraulic motor main body 120 in the left-side second motor device 50(2) as it is, and all of the hydraulic fluid discharged from the hydraulic motor main body 120 in the right-side first motor device 50(1) is supplied to the hydraulic motor main body 120 in the right-side second motor device 50(2) as it is.

In the right-left differential/front-rear differential-lock state, even if one of the pair of first driving wheels 20(1) and the pair of second driving wheels 20(2) falls into a depression or a mud area so that the rotation load of the one driving wheel becomes extremely small with respect to the remaining driving wheels, the hydraulic fluid from the hydraulic pump main body 420 flows into the hydraulic motor main body 120 that drives the other driving wheel on a side opposite from the one driving wheel in a right and left direction as well as into the hydraulic motor main body that drives the one driving wheel, therefore the traveling state of the working vehicle could be stabilized.

Specifically, if one of the pair of first driving wheels 20(1) and the pair of second driving wheels 20(2) falls into a depression or a mud area so that the rotation load of the one driving wheel becomes extremely small with respect to the remaining driving wheels when the right-left differential/front-rear differential state is selected, the hydraulic fluid from the hydraulic pump main body 420 flows in a concentrated manner into the hydraulic motor main body 120 that operatively drives the one driving wheel, as a result, the hydraulic fluid will not be supplied to the hydraulic motor main body that drives the other driving wheel on a side opposite from the one driving wheel in a right and left direction.

On the other hand, when the right-left differential/front-rear differential-lock state is selected, the hydraulic fluid discharged from the hydraulic pump main body 420 is supplied to the left-side hydraulic line and the right-side hydraulic line in a distributed manner according to the load proportion therebetween.
Therefore, even if the rotation load of the one driving wheel becomes extremely small with respect to the remaining driving wheels, an amount of the hydraulic fluid distributed according to the load proportion between the left-side hydraulic line and the right-side hydraulic line is supplied to the other hydraulic motor main body 120 that drives the other driving wheel on a side opposite from the one driving wheel in a right and left direction, therefore the other hydraulic motor main body could be effectively driven.

In the present embodiment, the left-side connecting line 631L includes, as shown in Fig. 2, the motor-side forward-movement low-pressure hydraulic fluid passage 512 in the left-side first motor device 50(1), the motor-side forward-movement high-pressure hydraulic fluid passage 511 in the left-side second motor device 50(2), and a left-side connecting conduit 632L that fluidly connects the motor-side forward-movement low-pressure-side hydraulic fluid port 512(P) in the left-side first motor device 50(1) and the motor-side forward-movement high-pressure-side hydraulic fluid port 511(P) in the left-side second motor device 50(2).

The right-side connecting line 631R includes the motor-side forward-movement low-pressure hydraulic fluid passage 512 in the right-side first motor device 50(1), the motor-side forward-movement high-pressure hydraulic fluid passage 511 in the right-side second motor device 50(2), and a right-side connecting conduit 632R that fluidly connects the motor-side forward-movement low-pressure-side hydraulic fluid port 512(P) in the right-side first motor device 50(1) and the motor-side forward-movement high-pressure-side hydraulic fluid port 511(P) in the right-side second motor device 50(2).

The connecting line 630 includes, in addition to the left-side and right-side connecting lines 631L, 631R, a right-left connecting conduit 633 that fluidly connects the left-side and right-side connecting conduits 632L, 632R, and the driving-mode switching valve 635 is interposed in the right-left connecting conduit 633.

The working vehicle 1A further includes, as shown in Fig. 2, a charge line 660 for replenishing the HST with hydraulic fluid, and a charge relief valve 665 for setting a hydraulic pressure of the charge line 660.
The charge line 660 has a first end fluidly connected to a discharge side of the first auxiliary pump main body 460 and second ends fluidly connected to a forward-movement high-pressure side and a forward-movement low-pressure side of the HST line through a pair of check valves, respectively.

In the present embodiment, the charge line 660 includes a charge fluid passage 661 formed in the pump case 430 in the hydraulic pump unit 40.
Specifically, the charge fluid passage 661 has a first end fluidly connected to the discharge side of the first auxiliary pump main body 460 and second ends fluidly connected to both of the pump-side forward-movement high-pressure hydraulic fluid passage 441 and the pump-side forward-movement low-pressure hydraulic fluid passage 442 through the pair of check valves, respectively.
The charge relief valve 665 is mounted to the pump case 430 so as to have a primary side fluidly connected to the charge fluid passage 661 on an upstream side than the pair of check valves 663.

The working vehicle 1A further includes, as shown in Fig. 2, a hydraulic fluid line 670 having a first end fluidly connected to a discharge side of the second auxiliary pump main body 470 and a second end fluidly connected to a hydraulic device (the hydraulic steering mechanism 70 in the present embodiment), and a relief valve 675 for setting hydraulic pressure of the hydraulic fluid line 670.
A reference numeral 680 in Fig. 2 designates a return line for returning hydraulic fluid returned from the hydraulic steering mechanism 70 and hydraulic fluid relieved from the relief valve 675 into the external reservoir tank 90.

The four hydraulic actuating mechanisms 200 provided in the pair of first motor devices 50(1) and the pair of second motor devices 50(2) are operatively controlled by hydraulic fluid supplied from the single hydraulic pressure source.

In the present embodiment, the four hydraulic actuating mechanisms 200 are operatively controlled with use of a part of pressurized fluid discharged from the second auxiliary pump main body 470.
More specifically, as shown in Fig. 2, the working vehicle 1A includes a supply line 710 that has a first end fluidly connected to the hydraulic fluid line 670, a speed-change switch valve 720 that is fluidly connected to a second end of the supply line 710, and a supply/discharge line 730 that has a first end fluidly connected to the speed-change switch valve 720 and second ends fluidly connected to the respective piston accommodating spaces of the four hydraulic actuating mechanisms 200.

The speed-change switch valve 720 is configured to selectively take a supply state of fluidly connecting the supply line 710 to the supply/discharge line 730 and a discharge state of blocking the second end of the supply line 710 and draining the supply/discharge line 730.

The speed-change switch valve 720 is manipulated with use of a sub speed-change operation member 16 such as a switch that is disposed in the vicinity of the driver's sheet 15.
More precisely, as shown in Fig. 2, the working vehicle 1A also includes the sub speed-change operation member 16 that outputs a manipulate signal in response to an manual operation, and a control device 3 that operatively controls the speed-change switch valve 720 in accordance with the manipulate signal outputted from the sub speed-change operation member 16.

In the present embodiment, as shown in Fig. 2, the supply line 710 has a supply conduit 711 that has a first end fluidly connected to the hydraulic fluid line 670 and a second end fluidly connected to a primary port of the speed-change switch valve 720.

As shown in Fig. 2, the supply/discharge line 730 has four supply/discharge fluid passages 731 that are formed respectively in the pair of first motor devices 50(1) and the pair of second motor devices 50(2), and a supply/discharge conduit 732 that has a first end fluidly connected to a secondary port of the speed-change switch valve 720 and second ends fluidly connected to the four supply/discharge fluid passages 731, respectively.

In the present embodiment, as shown in Figs. 3, 7, and 8, each of the supply/discharge fluid passages 731 has a first end fluidly connected to the pressure receiver chamber 211 in the corresponding piston accommodating space 210 and a second end opened to the outer surface so as to form a supply/discharge port 731(P).
The second ends of the supply/discharge conduit 732 are fluidly connected to the respective supply/discharge ports 731(P).

The supply/discharge ports 731(P) are preferably located inside in the vehicle widthwise direction than the support frames 13(1) and 13(2) to which the first and second motor devices 50(1) and 50(2) are respectively coupled.

More specifically, as shown in Figs. 3 and 4, the pair of first motor devices 50(1) and the pair of second motor devices 50(2) are supported respectively by the corresponding support frames 13(1) and 13(2) such that motor port blocks 135 are located inside in the vehicle widthwise direction than the corresponding support frames 13(1) and 13(2).
The supply/discharge ports 731(P) are located inside in the vehicle widthwise direction than the corresponding support frames 13(1) and 13(2).

The configuration makes it possible to position within the vehicle frame 10 in planar view the conduits 611, 632L, 632R, and 651 that are fluidly connected to the motor-side forward-movement high-pressure hydraulic fluid ports 511(P) and the motor-side forward-movement low-pressure hydraulic fluid ports 512(P) provided in the motor port blocks 135, as well as the supply/discharge conduit 732 that is fluidly connected to the supply/discharge ports 731(P), thereby effectively preventing any of the conduits from being damaged or the like due to contact with an external obstacle.

As described above, in the working vehicle 1A according to the present embodiment, the single hydraulic pump main body 420 can vary the suction/discharge amount, and the four hydraulic motor main bodies 120 provided in the pair of first motor devices 50(1) and the pair of second motor devices 50(2) also can vary the respective suction/discharge amounts.
Therefore, in comparison to a conventional hydraulic four-wheel-drive working vehicle in which only the hydraulic pump main body 420 can vary the suction/discharge amount, the working vehicle 1A according to the present embodiment makes it possible to broaden the variable range of the driving speed/driving torque of the driving wheels 20(1) and 20(2).

Further, in the present embodiment, as described above, the four hydraulic actuating mechanisms 200 that respectively operate the motor volume adjusting mechanisms 150 provided in the pair of first motor devices 50(1) and the pair of second motor devices 50(2) are operatively controlled by hydraulic fluid supplied from the single hydraulic pressure source (the second auxiliary pump main body 470 in the present embodiment).
Accordingly, it is possible to synchronously vary with excellent controllability the suction/discharge amounts of the four hydraulic motor main bodies 120 provided in the pair of first motor devices 50(1) and the pair of second motor devices 50(2).

More specifically, if any one of the four hydraulic motor main bodies 120 has a suction/discharge rate different from those of the remaining hydraulic motor main bodies, the one hydraulic motor main body has a rotational speed different from those of the remaining hydraulic motor main bodies. As a result, the working vehicle 1A may make a turn despite the intention of the driver.
In this regard, in the present embodiment, as described above, the four hydraulic actuating mechanisms 200 provided in the pair of first motor devices 50(1) and the pair of second motor devices 50(2) are operatively controlled by hydraulic fluid supplied from the single hydraulic pressure source.
Accordingly, in comparison to a configuration in which the motor volume adjusting mechanisms 150 provided in the pair of first motor devices 50(1) and the pair of second motor devices 50(2) are operated by a mechanical linkage, the present embodiment makes it possible to synchronously vary the suction/discharge amounts of the four hydraulic motor main bodies 120 with excellent controllability.

Furthermore, as described above, the present embodiment realizes operative control on the four hydraulic actuating mechanisms 200 with use of hydraulic fluid supplied from the second auxiliary pump main body 470 that functions as a hydraulic pressure source for the hydraulic device, thereby preventing increase in number of the components as much as possible.

More preferably, the working vehicle 1A is configured to position, regardless of the manipulation state of the sub speed-change operation member 16, the piston 220 in each of the four hydraulic actuating mechanisms 200 at an initial position (the low speed position) on the first side in the axial line direction by the biasing force of the bias member 230 in a case where not all of the four hydraulic actuating mechanisms 200 provided in the pair of first motor devices 50(1) and the pair of second motor devices 50(2) are in same operation states one another.
The working vehicle 1A thus configured is capable of effectively preventing an unexpected turn or the like.

In the present embodiment, as shown in Figs. 2 and 5, each of the hydraulic actuating mechanisms 200 is provided with a position detector sensor 260 that detects the axial position of the piston 220.
The control device 3 is configured to forcibly turn, regardless of the manipulate signal outputted from the sub speed-change operation member 16, the speed-change switch valve 720 into the discharge state in a case where the four position detector sensors 260 provided in the pair of first motor devices 50(1) and the pair of second motor devices 50(2) do not output the same signals one another.
This configuration makes it possible effectively realize prevention of the state where the four hydraulic motor main bodies 120 provided in the pair of first motor devices 50(1) and the pair of second motor devices 50(2) have suction/discharge amounts different one another.

As described above, in the present embodiment, the hydraulic actuating mechanism 200 is embodied by a hydraulic single-acting type configured such that the piston 220 is positioned at the low speed position (see Fig. 7) on the first side in the axial line direction by the biasing force of the bias member 230 upon supply stop of hydraulic fluid from the hydraulic pressure source, while the piston 220 is positioned at the high speed position (see Fig. 8) on the second side in the axial line direction by hydraulic pressure of hydraulic fluid against the biasing force of the bias member 230 upon supply of the hydraulic fluid from the hydraulic pressure source.

In place of such a hydraulic actuating mechanism 200, it is possible to adopt a hydraulic actuating mechanism 200C of a hydraulic double-acting type configured to position the piston 220 at the low speed position on the first side in the axial line direction and at the high speed position on the second side in the axial line direction by hydraulic pressure of hydraulic fluid in response to switching of the supply channel of the hydraulic fluid from the hydraulic pressure source.

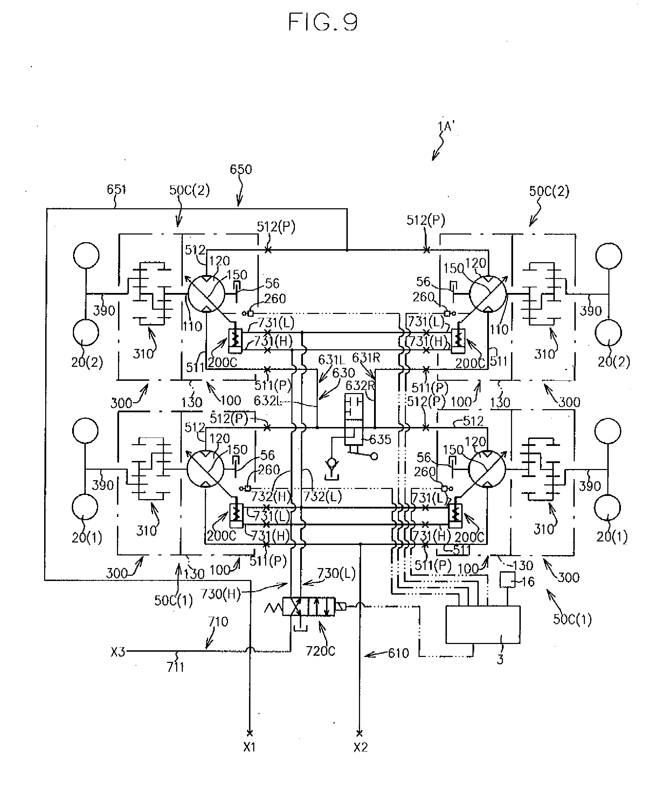

Fig. 9 shows a hydraulic circuit diagram of a working vehicle 1A' including a pair of first motor devices 50C(1) and a pair of second motor devices 50C(2), each of which includes the hydraulic actuating mechanism 200C.
The same reference numerals are denoted for the same components as those of the above-explained embodiment.

The first and second motor devices 50C(1), 50C(2) have the same configuration to each other.
Therefore, the following explanation is made on the first motor device 50C(1), and the same reference numerals or the same reference numerals with replacing the parenthetical reference (1) with (2) are denoted for the same components as those of the second motor device 50C(2) to omit the explanation thereof.

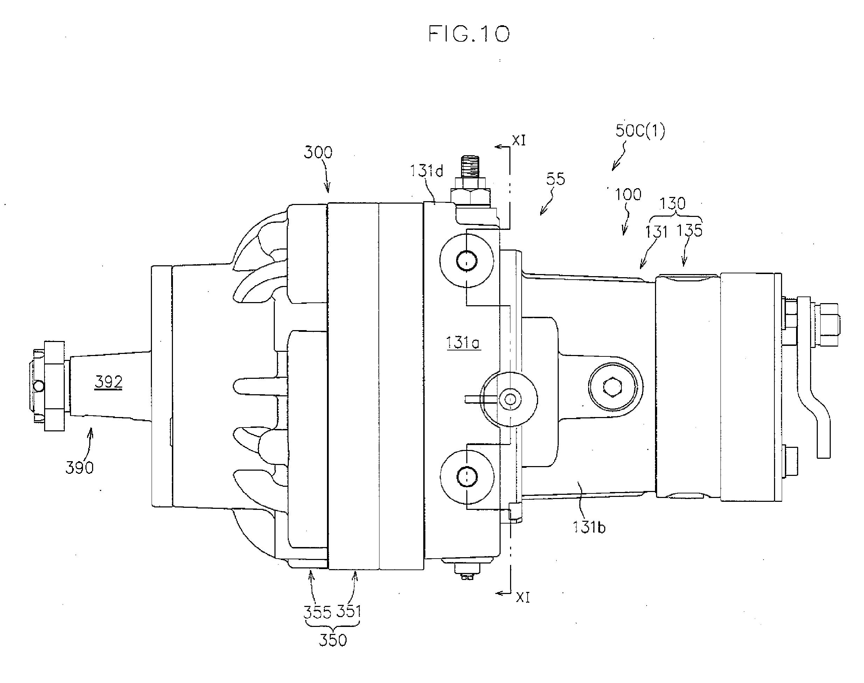

Fig. 10 shows a plan view of the motor device 50C(1).

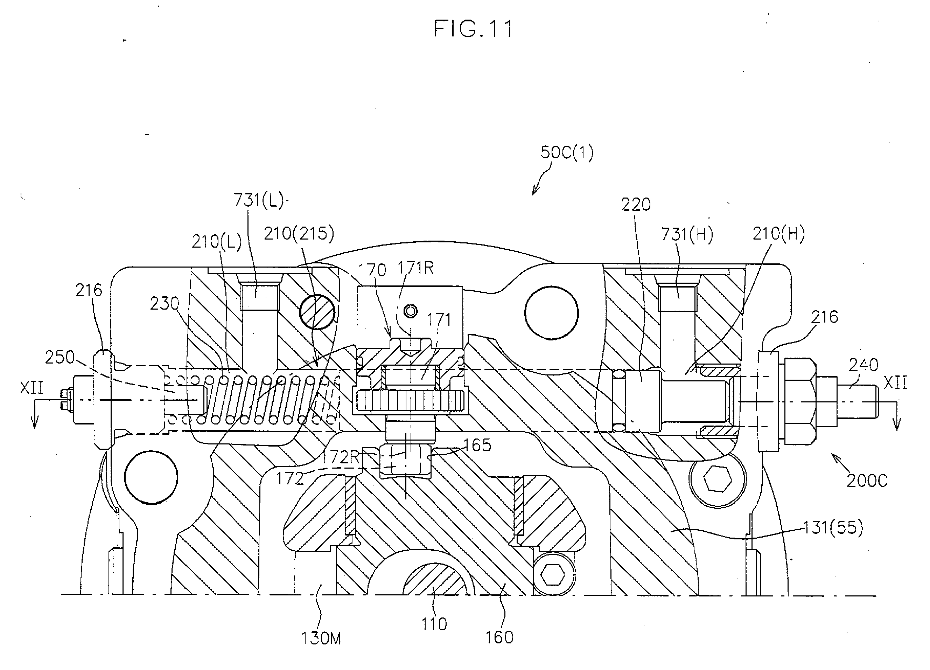

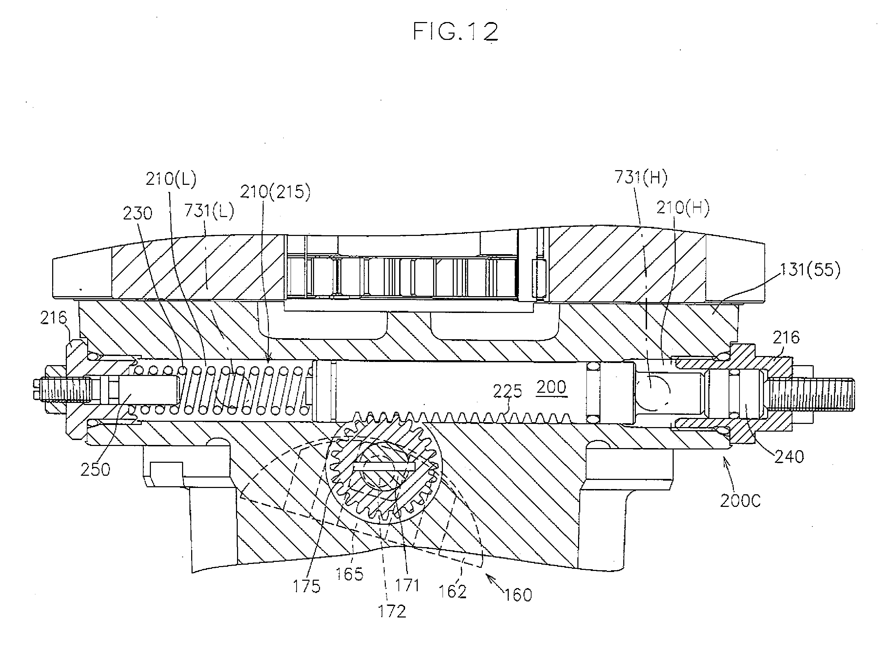

Figs. 11 and 12 respectively show cross-sectional views taken along line XI-XI in Fig.10 and taken along line XII-XII in Fig. 11.

The motor device 50C(1) has substantially the same construction as that of the motor device 50(1) except that the hydraulic actuating mechanism 200 is replaced with the hydraulic actuating mechanism 200C.

The hydraulic actuating mechanism 200C includes the piston accommodating space 210 that is formed in the housing 55 (the motor case main body 131 in the present embodiment) so as to be extended in a direction orthogonal to both of the axial line directions of the motor shaft 110 and the motor control shaft 170, and the piston 220 that is accommodated in the piston accommodating space 210 in a movable manner in an axial line direction while liquid-tightly dividing the piston accommodating space 210 into a high-speed-side pressure receiver chamber 210(H) located on a first side in the axial line direction and a low-speed-side pressure receiver chamber 210(L) located on a second side in the axial line direction.

In the same manner as the hydraulic actuating mechanism 200, the motor case main body 131 is formed with the boring 215 that is extended in a direction orthogonal to both of the axial line directions of the motor shaft 110 and the motor control shaft 170 and that has both ends opened to the outer surface.
The both ends of the boring 215 are closed with the cap members 216 respectively, so as to form the piston accommodating space 210.

The hydraulic actuating mechanism 200C further includes the first stopper member 240 that defines the first moving end of the piston 220 on the first side in the axial line direction and the second stopper member 250 that defines the second moving end of the piston 220 on the second side in the axial line direction, in the same manner as the hydraulic actuating mechanism 200.

The working vehicle 1A' including the hydraulic actuating mechanism 200C has a speed-change switch valve 720C in place of the speed-change switch valve 720, and also has a high-speed-side supply/discharge line 730(H) and a low-speed-side supply/discharge line 730(L) in place of the supply/discharge line 730, as shown in Fig. 9.

The high-speed-side supply/discharge line 730(H) has, as shown in Fig.9, a first end fluidly connected to a secondary port of the speed-change switch valve 720C and second ends fluidly connected to the high-speed-side pressure receiver chambers 210(H) of the hydraulic actuating mechanisms 200C provided in the pair of first motor devices 50C(1) and the pair of second motor devices 50C(2).

In the present modified embodiment, as shown in Figs. 9 and 11, the high-speed-side supply/discharge line 730(H) has four high-speed-side supply/discharge fluid passages 731(H) that are formed respectively in the pair of first motor devices 50C(1) and the pair of second motor devices 50C(2), and a high-speed-side supply/discharge conduit 732(H) that has a first end fluidly connected to the secondary port of the speed-change switch valve 720C and second ends fluidly connected to the four high-speed-side supply/discharge fluid passages 731(H), respectively.
Each of the high-speed-side supply/discharge fluid passages 731(H) has a first end opened to the outer surface to form a supply/discharge port and a second end fluidly connected to the corresponding high-speed-side pressure receiver chamber 210(H).

The low-speed-side supply/discharge line 730(L) has, as shown in Fig.9, a first end fluidly connected to the secondary port of the speed-change switch valve 720C and second ends fluidly connected to the low-speed-side pressure receiver chambers 210(L) of the hydraulic actuating mechanisms 200C provided in the pair of first motor devices 50C(1) and the pair of second motor devices 50C(2).

In the present modified embodiment, as shown in Figs. 9 and 11, the low-speed-side supply/discharge line 730(L) has four low-speed-side supply/discharge fluid passages 731(L) that are formed respectively in the pair of first motor devices 50C(1) and the pair of second motor devices 50C(2), and a low-speed-side supply/discharge conduit 732(L) that has a first end fluidly connected to the secondary port of the speed-change switch valve 720C and second ends fluidly connected to the four low-speed-side supply/discharge fluid passages 731(L), respectively.
Each of the low-speed-side supply/discharge fluid passages 731(L) has a first end opened to the outer surface to form a supply/discharge port and a second end fluidly connected to the corresponding low-speed-side pressure receiver chamber 210(L).

As shown in Fig.9, the speed-change switch valve 720C is configured so as to selectively take a low speed position of fluidly connecting the low-speed-side supply/discharge line 730(L) to the supply line 710 and fluidly connecting the high-speed-side supply/discharge line 730(H) to a drain line, or high speed position of fluidly connecting the low-speed-side supply/discharge line 730(L) to the drain line and fluidly connecting the high-speed-side supply/discharge line 730(H) to the supply line 710.

The speed-change switch valve 720C is position-controlled by the control device 3 in accordance with a manual manipulation on the sub speed-change operation member 16, in the same manner as the speed-change switch valve 730.

More preferably, as in the working vehicle 1A, the working vehicle 1A is configured to position, regardless of the manipulation state of the sub speed-change operation member 16, the piston 220 in each of the four hydraulic actuating mechanisms 200C at an initial position (the low speed position) on the first side in the axial line direction in a case where not all of the four hydraulic actuating mechanisms 200C provided in the pair of first motor devices 50C(1) and the pair of second motor devices 50C(2) are in same operation states one another.

Specifically, as shown in Figs. 9, 11 and 12, each of the hydraulic actuating mechanisms 200C further includes the bias member 230 that is accommodated in the low-speed-side pressure receiver chambers 210(L) so as to press the piston toward the first side in the axial line direction, and the position detector sensor 260 that detects the axial position of the piston 220.

The control device 3 is configured to forcibly turn, regardless of the manipulate signal outputted from the sub speed-change operation member 16, the speed-change switch valve 720C into the low speed position in a case where the four position detector sensors 260 provided in the pair of first motor devices 50C(1) and the pair of second motor devices 50C(2) do not output the same signals one another.
This configuration makes it possible to effectively realize prevention of the state where the four hydraulic motor main bodies 120 provided in the pair of first motor devices 50C(1) and the pair of second motor devices 50C(2) have suction/discharge amounts different one another.

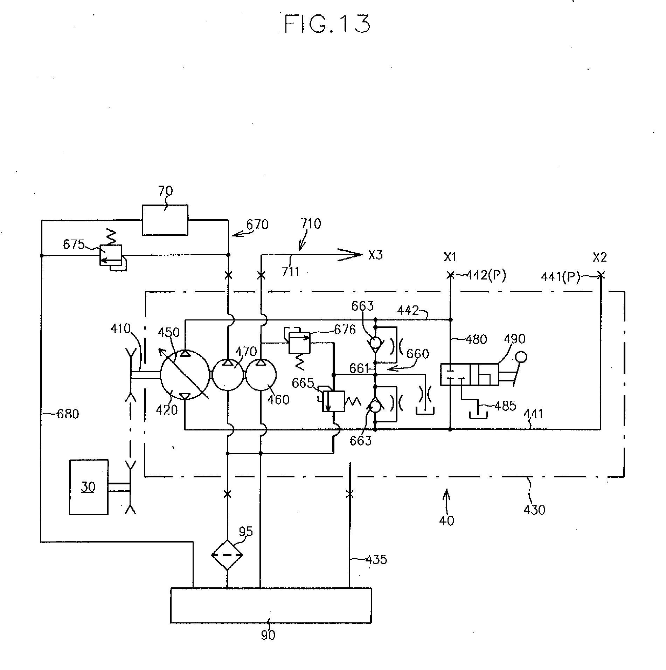

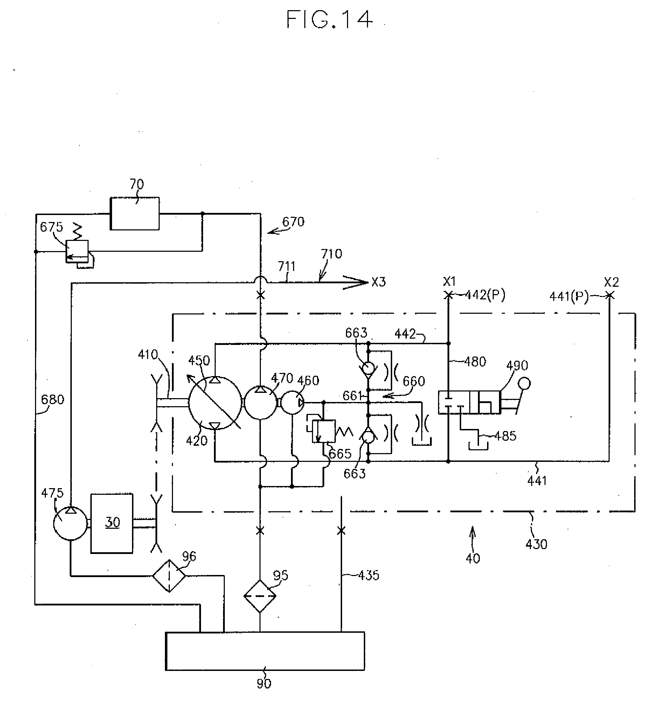

It is possible that the hydraulic pressure source for the hydraulic actuating mechanisms 200, 200C is embodied by the first auxiliary pump main body 460 functioning as a charge pump, in place of the second auxiliary pump main body 470, as shown in Fig. 13. A reference numeral 676 in Fig. 13 denotes a relief valve for setting hydraulic pressure of the supply line 710.
It is also possible that the driving power source 30 is provided with a third auxiliary pump main body 475 and the hydraulic pressure source for the hydraulic actuating mechanisms 200, 200C is embodied by the third auxiliary pump main body 475, as shown in Fig. 14. A reference numeral 96 in Fig. 14 denotes a filter interposed in a suction line of the third auxiliary pump main body 475.

### Second embodiment

A hydraulic four-wheel-drive working vehicle 1B including first and second motor devices 51(1), 51(2) modified from the first and second motor devices 50(1), 50(2) will now be described with reference to the accompanying drawings.
In the drawings, the same reference numerals are denoted for the same components as those of the first embodiment to omit the explanation thereof.

In the first embodiment described above, all the pair of first motor devices 50(1) and the pair of second motor devices 50(2) have an identical configuration.
That is, the pair of first motor devices 50(1) and the pair of second motor devices 50(2) are all configured to vary the suction/discharge amounts of the hydraulic motor main bodies.

The motor devices 50(1) and 50(2) are suitably utilized to increase the variable range of the traveling speed, in a working vehicle in which the pivot shaft 12 is located in the center in a vehicle lengthwise direction between the pair of first driving wheels 20(1) and the pair of second driving wheels 20(2).

To the contrary, the pair of first motor devices 51(1) and the pair of second motor devices 51(2) in the present embodiment are utilized, in order to compensate a difference in turning radius generated between the pair of first driving wheels 20(l) and the pair of second driving wheels 20(2), in a working vehicle 1B of an articulate type in which the pivot shaft 12 that connects the first frame 11(1) and the second frame 11(2) in a swingable manner is displaced on a first side from the center in the vehicle lengthwise direction between the pair of first driving wheels 20(1) and the pair of second driving wheels 20(2).

More specifically, in the working vehicle 1A according to the first embodiment described above where the pivot shaft 12 is disposed in the center in the vehicle lengthwise direction between the pair of first driving wheels 20(1) and the pair of second driving wheels 20(2), there is generated no difference in turning radius between the pair of first driving wheels 20(1) and the pair of second driving wheels 20(2).

On the other hand, in the working vehicle 1B where the pivot shaft 12 is displaced on the first side of the center in the vehicle lengthwise direction between the pair of first driving wheels 20(1) and the pair of second driving wheels 20(2), there is generated a difference in turning radius between the pair of first driving wheels 20(1) and the pair of second driving wheels 20(2) at the time when the vehicle makes a turn.

In order to compensate such a difference in turning radius, the pair of motor devices (the pair of first motor devices 51(1) according to the present embodiment) that drive the pair of driving wheels (the pair of first driving wheels 20(1) in the present embodiment) adjacent to the pivot shaft 12, out of the pair of first driving wheels 20(1) and the pair of second driving wheels 20(2), are configured to vary in a stepless manner the suction/discharge amounts of the hydraulic motor main bodies 120 in accordance with the vehicle turning angle.
In the present embodiment, the hydraulic motor main bodies 120 in the remaining motor devices (the pair of second motor devices 51(2) in the present embodiment) are of a fixed displacement type.

The first motor device 51(1) is configured by adopting as many as possible the components of the first motor device 50(1) in the first embodiment.
More specifically, the first motor devices 51(1) includes a hydraulic motor unit 100B that is modified from the hydraulic motor unit 100, the decelerating unit 300 and the output member 390.

The hydraulic motor unit 100B is different from the hydraulic motor unit 100 in the first embodiment only in that there is provided a mechanical actuating mechanism 200B in place of the hydraulic actuating mechanism 200.

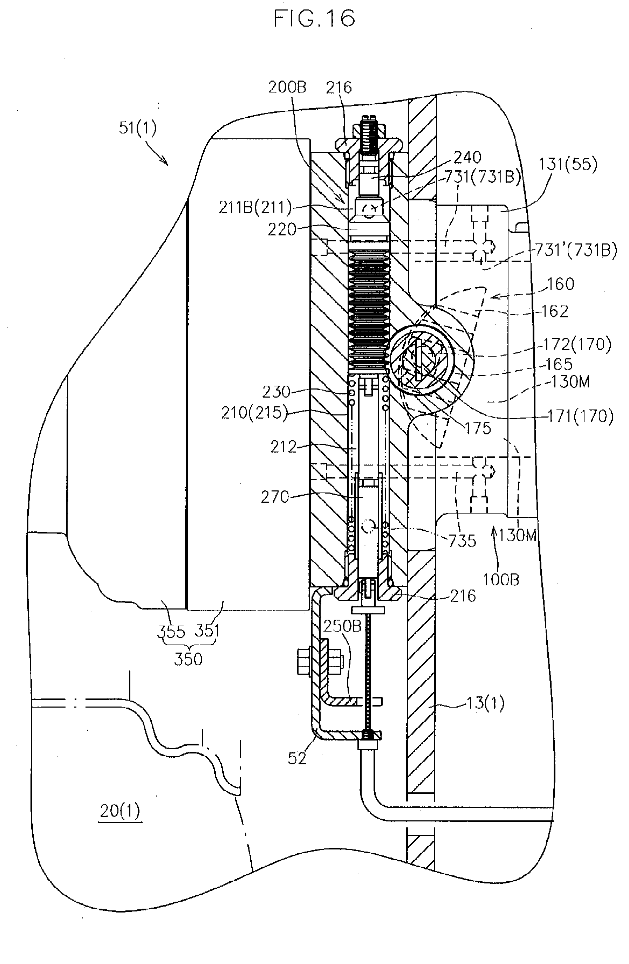

Fig. 16 is a horizontal cross-sectional plan view of the mechanical actuating mechanism 200B.
The mechanical actuating mechanism 200B is configured by adopting as many as possible the components of the hydraulic actuating mechanism 200.

More specifically, as shown in Fig. 16, the mechanical actuating mechanism 200B includes the piston accommodating space 210 that is configured by the boring 215 and the cap members 216 closing the both ends of the boring 215, the piston 220 that is accommodated in the piston accommodating space 210 in a movable manner along the axial line direction, the bias member 230 that biases the piston 220 toward the first side in the axial line direction, the first stopper member 240 that defines the first moving end of the piston 220 on the first side in the axial line direction, and a coupling rod 270 having a first end being coupled to the piston 220 so as to be relatively immovable manner along the axial line direction and a second end passing through the cap member 216 that closes the second side of the piston accommodating space 210 in the axial line direction so as to be capable of being manipulated from outside.

Similarly to the first embodiment, the piston 220 rotates the first end 171 of the motor control shaft 170 about the axis in accordance with the axial position of the piston 220.
More specifically, as the piston 220 is moved from the first side toward the second side in the axial line direction, the motor control shaft 170 is rotated about the axis line 171R of the first end 171 so as to slant the motor movable swash plate 160 about the pivot axis 160R from the low speed position to the high speed position.

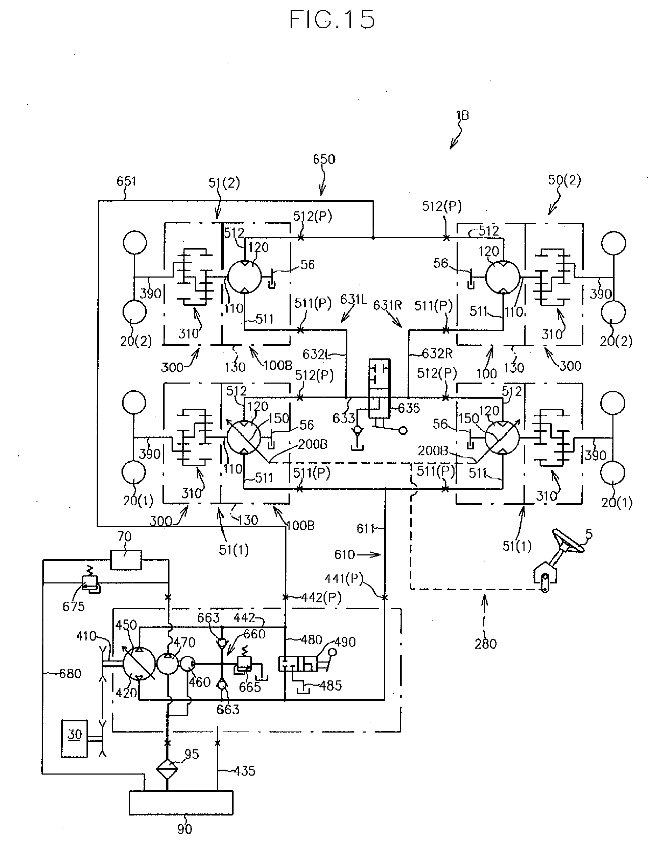

As shown in Figs. 15 and 16, the coupling rod 270 is operatively connected to the steering member 5 by way of an appropriate link mechanism 280 such that the piston 220 is moved toward the second side in the axial line direction against the biasing force of the bias member 230 as the steering member 5 is manipulated to make a turn from a straight traveling position.

More specifically, as shown in Fig. 15, the link mechanism 280 has a first end operatively connected to the steering member 5, and second ends branched into two directions operatively connected to the pair of coupling rods 270 provided in the pair of first motor devices 51(1) that respectively drive the pair of first driving wheels 20(1), so that the pair of pistons 220 respectively provided in the pair of first motor devices 51(1) are moved in the axial line direction in a synchronized manner to each other upon manipulation of the steering member 5.

As shown in Fig. 16, the housing 55 is formed with an open hole 731B for opening a chamber 211B (corresponding to the pressure receiver chamber 211 according to the first embodiment) in the piston accommodating space 210 that is positioned on the first side from the piston 220 in the axial line direction, in order to allow the piston 220 to be axially moved in the piston accommodating space 210.
In the present embodiment, the open hole 731B is formed by utilizing the supply/discharge fluid passage 731.
More precisely, as shown in Fig. 16, the open hole 731B has the supply/discharge fluid passage 731, and an additional boring 731' for fluidly connecting the supply/discharge fluid passage 731 to the motor space 130M.
The spring chamber 212 is opened to the motor space 130M by way of the open hole 735.

The mechanical actuating mechanism 200B includes, in addition to the components described above, a second stopper member 250B in place of the second stopper member 250, which defines the second moving end of the piston 220 on the second side in the axial line direction.
As shown in Fig. 16, the second stopper member 250B is attached directly or indirectly to the housing 55 such that the second stopper member 250B is engaged with the second end of the coupling rod 270 in the axial line direction to define the second moving end of the piston 220 on the second side in the axial line direction.

In the present embodiment, the second stopper member 250B according to is attached to an attachment stay 52 that is fixed to the housing 55.
The second stopper member 250B is preferably fixed to the attachment stay 52 so as to be position-adjustable along the axial line direction of the piston 220.
This configuration facilitates adjustment of the second moving end of the piston 220 that defines a highest speed position of the motor movable swash plate 160.

As shown in Fig. 15, the pair of second motor devices 51(2) is obtained by replacing the motor volume adjusting mechanism 150 with a fixed swash plate and removing the hydraulic actuating mechanism 200 with respect to the second motor device 50(2) in the first embodiment.

This specification is by no means intended to restrict the present invention to the preferred embodiments set forth therein. Various modifications from the hydraulic four-wheel-drive working vehicle may be made by those skilled in the art without departing from the spirit and scope of the present invention as defined in the appended claims.

## Claims

1. A hydraulic four-wheel-drive working vehicle (1A, 1A', 1B) comprising a driving power source (30); a pair of left and right first driving wheels (20(1)) arranged on one side in a vehicle lengthwise direction; a pair of left and right second driving wheels (20(2)) arranged on the other side in the vehicle lengthwise direction; a hydraulic pump unit (40) including a hydraulic pump main body (420) operatively driven by the driving power source and a pump volume adjusting mechanism (450) that varies a suction/discharge amount of the hydraulic pump main body upon manipulation of a main speed-change operation member (15) capable of being manually manipulated; a pair of left and right first motor devices (50(1), 50C(1), 51(1)) that respectively drives the left and right first driving wheels; and a pair of left and right second motor devices (50(2), 50C(2), 51(2)) that respectively drives the left and right second driving wheels, the hydraulic four-wheel-drive working vehicle being **characterized in that,**
each of the pair of first motor devices and the pair of second motor devices includes a hydraulic motor main body (120) that is fluidly connected to the hydraulic pump main body via an HST line so as to form an HST in cooperation with the hydraulic pump main body, a motor volume adjusting mechanism (150) that varies a suction/discharge amount of the hydraulic motor main body, a hydraulic actuating mechanism (200, 200C) that operates the motor volume adjusting mechanism, and a housing (55) that accommodates the hydraulic motor main body, the motor volume adjusting mechanism and the hydraulic actuating mechanism, and
the hydraulic actuating mechanisms in the pair of first motor devices and the pair of second motor devices are operated and controlled with use of hydraulic fluid from a single hydraulic pressure source.

2. A hydraulic four-wheel-drive working vehicle according to claim 1 wherein
the motor volume adjusting mechanism includes a motor movable swash plate (160) that is slantable about a pivot axis (160R) orthogonal to a rotational axis line of the hydraulic motor main body, and a motor control shaft (170) that has a first end supported in a rotatable manner around its axial line by the housing in a state of being operatively connected to the hydraulic actuating mechanism and a second end operatively connected to the motor movable swash plate, and
the motor control shaft is an eccentric shaft in which the second end has an axial line eccentric with that of the first end, so that the second end slants the motor movable swash plate around the pivot axis upon rotation of the first end around the axial line by the hydraulic actuating mechanism.

3. A hydraulic four-wheel-drive working vehicle according to claim 2 wherein
the hydraulic actuating mechanism includes a piston accommodating space (210) formed in the housing, a piston (220) accommodated in the piston accommodating space in a movable manner in an axial line direction while liquid-tightly dividing the piston accommodating space into a pressure receiver chamber (211) and a spring chamber (212) that are respectively located on first and second sides in the axial line direction, and a bias member (230) accommodated in the spring chamber so as to press the piston toward the first side in the axial line direction,
the hydraulic four-wheel-drive working vehicle further comprises a speed-change switch valve (720, 720C) that selectively takes, in accordance with a manual operation, a supply state of supplying hydraulic fluid from the hydraulic pressure source to the pressure receiver chamber and a discharge state of discharging hydraulic fluid from the pressure receiver chamber, and
the piston is operatively connected to the first end of the motor control shaft so as to rotate the first end about the axial line in accordance with movement of the piston in the axial line direction.

4. A hydraulic four-wheel-drive working vehicle according to claim 3, further comprising a sub speed-change operation member (16) that outputs a manipulate signal in response to an manual operation thereto, and a control device (3) that operatively controls the speed-change switch valve in accordance with the manipulate signal, wherein
the hydraulic actuating mechanisms includes a position detector sensor (260) that detects the position of the piston in the axial line direction,
the control device forcibly turns, regardless of the manipulate signal outputted from the sub speed-change operation member, the speed-change switch valve into the discharge state so that the piston is positioned at an initial position on the first side in the axial line direction by the biasing force of the biasing member, in a case where the four position detector sensors provided in the pair of first motor devices and the pair of second motor devices do not output the same signals one another.

5. A hydraulic four-wheel-drive working vehicle according to claim 3 or 4, wherein
the hydraulic pump unit includes an auxiliary pump main body (460, 470, 475) that is operatively driven along with the hydraulic pump main body by the driving power source,
the hydraulic four-wheel-drive working vehicle includes a hydraulic fluid line (670) having a first end fluidly connected to a discharge side of the auxiliary pump main body and a second end fluidly connected to a hydraulic device, a relief valve (675) for setting hydraulic pressure of the hydraulic fluid line, a supply line (710) having a first end fluidly connected to the hydraulic fluid line and a second end fluidly connected to a primary side of the speed-change switch valve, and a supply/discharge line (730) having a first end fluidly connected to a secondary side of the speed-change switch valve and second ends fluidly connected to the respective pressure receiver chambers of the four piston accommodating spaces in the pair of first motor devices and the pair of second motor devices, and
the speed-change switch valve fluidly connects the supply line to the supply/discharge line when being in the supply state, and blocks the second end of the supply line and drains the supply/discharge line when being in the discharge state.

6. A hydraulic four-wheel-drive working vehicle according to claim 5, wherein
the housing includes a motor case main body (131) formed with an opening (131c) that has a size allowing the hydraulic motor main body to pass therethrough, and a motor port block (135) detachably connected to the motor case main body so as to close the opening and formed with motor-side HST hydraulic fluid passages (511, 512) configuring a part of the HST line,
the housing is supported by a support frame (13(1), 13(2)) facing a corresponding driving wheel in such a manner that the motor port block is located on an inner side than the support frame with respect to a vehicle widthwise direction,
the housing is formed with a supply/discharge fluid passage (731) that configures a part of the supply/discharge line, and
the supply/discharge fluid passage has a first end fluidly connected to the pressure receiver chamber and a second end opened to an outer surface to form a supply/discharge port (731(P)) that is positioned on an inner side than the support frame with respect to the vehicle widthwise direction.

7. A hydraulic four-wheel-drive working vehicle according to any one of claims 3 to 6, wherein
the motor movable swash plate is provided with an engagement groove (165) that is extended in a radial direction with the pivot axis as a reference,
the second end of the motor control shaft is engaged into the engagement groove so that the motor control shaft is movable in a radial direction but immovable in a circumferential direction relative to the motor movable swash plate with the pivot axis as a reference, and
the axis line of the second end of the motor control shaft is positioned at a first position that is fallen on a virtual circular arc (FC) having a center coaxial with the pivot axis and passing through the axis line of the first end and that is positioned on a first side than a virtual reference line (FL) passing through the pivot axis and the axis line of the first end in a circumferential direction with the pivot axis as a reference at a time when the piston is positioned at a first moving end on the first side in the axial line direction, and is positioned at a second position that is fallen on the virtual circular arc and that is positioned on a second side than the virtual reference line in the circumferential direction with the pivot axis as a reference.

8. A hydraulic four-wheel-drive working vehicle according to claim 7, wherein
the hydraulic actuating mechanism further includes first and second stopper members (240, 250) that are fixed to the housing so as to be independently position-adjustable with respect to the axial line direction of the piston,
the first stopper member is come into contact with the piston to define the first moving end of the piston on the first side in the axial line direction of the piston at the time when the second end of the motor control shaft is positioned at the first position, and
the second stopper member is come into contact with the piston to define the second moving end of the piston on the second side in the axial line direction of the piston at the time when the second end of the motor control shaft is positioned at the second position.

9. A hydraulic four-wheel-drive working vehicle according to any one of claims 1 to 8, wherein
the HST line includes a forward-movement high-pressure line (610) that supplies hydraulic fluid, which is discharged from the hydraulic pump main body at a forward movement of the vehicle, to the hydraulic motor main bodies of the pair of first motor devices, a connecting line (630) that supplies hydraulic fluid, which is discharged from the hydraulic motor main bodies in the pair of first motor devices at the forward movement of the vehicle, to the hydraulic motor main bodies of the pair of second motor devices, and a forward-movement low-pressure line (650) that returns hydraulic fluid, which is discharged from the hydraulic motor main bodies in the pair of second motor devices at the forward movement of the vehicle, to the hydraulic pump main body, and
the connecting line includes a left-side connecting line (631L) that fluidly connects the hydraulic motor main bodies in the left-side first and second motor devices, a right-side connecting line (631R) that fluidly connects the hydraulic motor main bodies in the right-side first and second motor devices, and a driving-mode switching valve (635) that selectively fluidly connects or fluidly disconnects the left-side and right-side connecting lines.
